# NEUE EUROPÄISCHE PATENTSCHRIFT

(11) **EP 0 897 405 B2**
(45) Veröffentlichungstag und Bekanntmachung des Hinweises auf die Entscheidung über den Einspruch: **12.04.2006**
(45) Hinweis auf die Patenterteilung: 26.01.2000
(21) Anmeldenummer: 97921690.0
(22) Anmeldetag: 22.04.1997
(51) Int. Cl.: C08G 18/62

(54) **AUS MINDESTENS 3 KOMPONENTEN BESTEHENDES BESCHICHTUNGSMITTEL**
COATING AGENT CONSISTING OF AT LEAST 3 COMPONENTS
AGENT DE REVETEMENT COMPRENANT AU MOINS TROIS COMPOSANTS

(30) Priorität: 08.05.1996 DE 19618446
(43) Veröffentlichungstag der Anmeldung: 24.02.1999
(73) Patentinhaber: BASF Coatings Aktiengesellschaft, 48165 Münster (DE)
(72) Erfinder: LETTMANN, Bernhard, D-48317 Drensteinfurt (DE); RINK, Heinz-Peter, D-48153 Münster (DE); MAYER, Bernd, D-48165 Münster (DE); NIENHAUS, Egbert, D-59387 Ascheberg (DE); GRANDHEE, Sunitha, Novi, MI 48375 (US)
(74) Vertreter: Fitzner, Uwe
(86) Internationale Anmeldenummer: PCT/EP1997/002024
(87) Internationale Veröffentlichungsnummer: WO 1997/042247

(56) Entgegenhaltungen:
- EP-A- 0 038 127
- EP-A- 0 089 497
- WO-A-92/22612
- WO-A-95/35348
- DE-A- 4 421 823
- DE-A- 19 542 626
- US-A- 5 071 904

## Beschreibung

### Gebiet der Erfindung

Gegenstand der vorliegenden Erfindung ist ein aus mindestens drei Komponenten (I), (II) und (III) bestehendes Beschichtungsmittel auf der Basis eines in einem oder mehreren organischen, gegebenenfalls wasserverdünnbaren Lösemitteln gelösten oder dispergierten, hydroxyl- und säuregruppenhaltigen Polymers, eines oder mehrerer isocyanatgruppenhaltigen Vernetzungsmittel und einer oder mehrerer Dispersionen von hydroxyl- und säuregruppenhaltigen Polymeren, enthaltend als erfindungswesentlichen Bestandteil mindestens eine nach einem spezifischen Verfahren hergestellte wäßrige Dispersion eines hydrophilierten Polymerharzes HP.

Die vorliegende Erfindung betrifft außerdem ein Verfahren zur Herstellung dieser Beschichtungsmittel sowie die Verwendung der Beschichtungsmittel in der Reparaturlackierung sowie für die Beschichtung von Kunststoffen sowie als Decklack oder Füller.

### Stand der Technik

Die Lackindustrie ist aus ökologischen und ökonomischen Gründen bestrebt, einen möglichst großen Teil der in Lacken eingesetzten organischen Lösemittel durch Wasser zu ersetzen. Insbesondere bei der Automobillackierung besteht ein großer Bedarf an wäßrigen Lacken. Dies gilt sowohl für den Bereich der Automobilserienlackierung als auch für den Bereich der Autoreparaturlackierung.

Aus der EP-B-0 358 979 sind wäßrige Zweikomponenten-Polyurethan-Beschichtungsmittel bekannt, die ein in Wasser dispergiertes, hydroxylgruppenhaltiges Polyacrylatharz sowie eine Polyisocyanatkomponente enthalten. Diese in der EP-B-0 358 979 beschriebenen Lacke zeigen allerdings hinsichtlich Glanz, Ausspannung (geringe Narbe der Beschichtung), Kocherneigung und dadurch bedingter Spritzsicherheit sowie hinsichtlich der Witterungsbeständigkeit, insbesondere hinsichtlich der Beständigkeit im Schwitzwasserkonstantklima (40 Grad C, 240 Stunden), Verarbeitbarkeit (Viskositätsabfall und zu kurze Topfzeit) und Härte große Nachteile.

Die Aufgabe, ein wäßriges Beschichtungsmittel zur Verfügung zu stellen, das gegenüber den aus der EP-B-0 358 979 bekannten wäßrigen Zweikomponenten-Polyurethan-Beschichtungsmitteln verbesserte Eigenschaften aufweist und/oder verbesserte Lackfilme liefert, wird durch die noch nicht veröffentlichte deutsche Patentanmeldung P 44 21 823.0 weitgehend gelöst. Dennoch treten mitunter bei der Anwendung der 3-Komponenten-Systeme gemäß der noch unveröffentlichten deutschen Patentanmeldung P 44 21 823.0 als Autoreparaturlacke an den ausgehärteten Beschichtungen immer noch Probleme durch Kochern, Grauschleier und/oder strukturierte Oberflächen, bedingt durch schlechten Verlauf der Beschichtungsmittel, auf.

Die daraus resultierende Aufgabe, Beschichtungssysteme für die Autoreparaturlackierung zur Verfügung zustellen, die unter den Bedingungen der Autoreparaturlackierung zu Beschichtungen führen, die keine Oberflächenprobleme, wie Kocher oder Strukturen, sowie keine Beeinträchtigung der optischen Güte, wie Grauschleier, aufweisen, wird durch die in der noch nicht veröffentlichten deutschen Patentanmeldung P 195 42 626 beschriebenen 3-komponentigen Beschichtungsmittel gelöst.

Diese sind dadurch gekennzeichnet sind, daß
1.) die Komponente (I) als Bindemittel (A)
   (A1) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Acrylatcopolymerisat (A1) und/oder
   (A2) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Polyesterharz (A2) und/oder
   (A3) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Polyurethanharz (A3) und/oder
   (A4) gegebenenfalls mindestens ein weiteres Bindemittel enthält,
   wobei die Bindemittel (A1) und/oder (A2) und/oder (A3) und/oder (A4) so ausgewählt werden, daß eine 50 %ige Lösung des Bindemittels (A) in Ethoxyethylpropionat bei 23°C eine Viskosität von <= 6,0 dPa.s aufweist,
2.) die Komponente (II) als Vernetzungsmittel (F) mindestens ein, gegebenenfalls in einem oder mehreren organischen Lösemitteln gelöstes oder dispergiertes, Di- und/oder Polyisocyanat (F1) und/oder gegebenenfalls mindestens ein weiteres Vernetzungsmittel bestehend aus mindestens einer Epoxidverbindung (F2) mit mindestens zwei Epoxidgruppen pro Molekül und/oder gegebenenfalls mindestens einem Aminoplastharz (F3), enthält und
3.) die Komponente (III) die Komponenten (A1) und/oder (A2) und/oder (A3) und/oder (A4) in wäßriger Dispersion enthält.

Die in der noch nicht veröffentlichten deutschen Patentanmeldung P 195 42 626.6 beschriebenen Beschichtungsmittel lösen die eingangs angesprochenen Aufgaben hervorragend.

Es besteht jedoch weiterhin das Bedürfnis nach wäßrigen Beschichtungsmitteln mit einer verbesserten Wasserbeständigkeit, besonders gegen Schwitzwasser, sowie insbesondere mit einem verbesserten, d.h. beschleunigten Trocknungsverhalten.

### Aufgabe und Lösung

Die Aufgabe der vorliegenden Erfindung bestand also darin, insbesondere das Trocknungsverhalten der wäßrigen Beschichtungsmittel weiter zu verbessern, bei gleichzeitigem Erhalt der aus noch nicht veröffentlichten P 195 42 626.6 bekannten hervorragenden Eigenschaften, wie insbesondere verbesserter Glanz, gute Fülle, geringere Kocherneigung, bessere Spritzsicherheit und verbesserten Verlauf, sowie gute Witterungsbeständigkeit.

überraschenderweise wird diese Aufgabe durch Beschichtungsmittel gemäß der noch nicht veröffentlichten Patentanmeldung P 195 42 626.6 gelöst, wenn die Komponente (III) der in P 195 42 626.6 beschriebenen Beschichtungsmittel als erfindungswesentlichen Bestandteil mindestens eine wäßrige Dispersion eines hydrophilierten Polymerharzes HP enthält, das nach einem ein- oder mehrstufigen Verfahren hergestellt worden ist, indem in entionisiertem Wasser eine Präemulsion PE, enthaltend Mikroteilchen, bestehend aus einem hydrophoben Polymerharz HP' und den monomeren Bestandteilen
(aa1) einen von (aa2), (aa3) und (aa4) verschiedenen und mit (aa2), (aa3) und (aa4) copolymerisierbaren, im wesentlichen carboxylgruppenfreien (Meth)acrylsäureester oder einem Gemisch aus solchen Monomeren,
(aa2) ein mit (aa1), (aa3) und (aa4) copolymerisierbares, ethylenisch ungesättigtes Monomer, das mindestens eine Hydroxylgruppe pro Molekül trägt und im wesentlichen carboxylgruppenfrei ist,
(aa3) gegebenenfalls ein mit (aa1), (aa2) und (aa4) copolymerisierbares, von (aa1), (aa2) und (aa4) verschiedenes, im wesentlichen carboxylgruppenfreies, ethylenisch ungesättigtes Monomer oder einem Gemisch aus solchen Monomeren, sowie
(aa4) ein mindestens eine Carboxylgruppe pro Molekül tragendes, mit (aa1), (aa2) und (aa3) copolymerisierbares, ethylenisch, ungesättigtes Monomer oder ein Gemisch aus solchen Monomeren
durch hohe Scherbelastung der wäßrigen Dispersion des hydrophoben Polymerharzes HP' und der wäßrigen Emulsion der monomeren Bestandteile hergestellt wird und anschließend die polymerisierbaren Bestandteile der Präemulsion PE polymerisiert werden.

In einer weiteren Ausführungsform der Erfindung wird das hydrophilierte Polymerharz hergestellt, indem
I. in entionisiertem Wasser eine Präemulsion PE, enthaltend Mikroteilchen, bestehend aus dem hydrophoben Polymerharz HP' und den monomeren Bestandteilen
   (aa1) einem von (aa2) und (aa3) verschiedenen und mit (aa2) und (aa3) copolymerisierbaren, im wesentlichen carboxylgruppenfreien (Meth)acrylsäureester oder einem Gemisch aus solchen Monomeren,
   (aa2) einem mit (aa1) und (aa3) copolymerisierbaren, ethylenisch ungesättigten Monomeren, das mindestens eine Hydroxylgruppe pro Molekül trägt und im wesentlichen carboxylgruppehfrei ist, sowie
   (aa3) gegebenenfalls einem mit (aa1) und (aa2) copolymerisierbaren, von (aa1) und (aa2) verschiedenen, im wesentlichen carboxylgruppenfreien, ethylenisch ungesättigten Monomeren oder einem Gemisch aus solchen Monomeren,
   durch hohe Scherbelastung der wäßrigen Dispersion des hydrophoben Polymerharzes HP' und der wäßrigen Emulsion der monomeren Bestandteile hergestellt wird und anschließend mit der Polymerisation der polymerisierbaren Bestandteile der Präemulsion PE begonnen wird und anschließend
II. während und/oder nach Abschluß, jedoch nicht gleichzeitig mit Beginn, der Polymerisation der polymerisierbaren Bestandteile der Präemulsion PE ein Monomerengemisch, enthaltend
   (aa1) einen von (aa2), (aa3) und (aa4) verschiedenen und mit (aa2), (aa3) und (aa4) copolymerisierbaren, im wesentlichen carboxylgruppenfreien (Meth)acrylsäureester oder einem Gemisch aus solchen Monomeren,
   (aa2) ein mit (aa1), (aa3) und (aa4) copolymerisierbares, ethylenisch ungesättigtes Monomer, das mindestens eine Hydroxylgruppe pro Molekül trägt und im wesentlichen carboxylgruppenfrei ist,
   (aa3) gegebenenfalls ein mit (aa1), (aa2) und (aa4) copolymerisierbares, von (aa1), (aa2) und (aa4) verschiedenes, im wesentlichen carboxylgruppenfreies, ethylenisch ungesättigtes Monomer oder einem Gemisch aus solchen Monomeren, sowie.
   (aa4) ein mindestens eine Carboxylgruppe pro Molekül tragendes, mit (aa1), (aa2) und (aa3) copolymerisierbares, ethylenisch ungesättigtes Monomer oder ein Gemisch aus solchen Monomeren
   im Zulauf zugegeben wird und anschließend polymerisiert wird.

In einer weiteren bevorzugten Ausführungsform der Erfindung enthält das hydrophobe Polymerisat HP' polymerisierbare Doppelbindungen, deren Zahl im statistischen Mittel vorzugsweise 0,05 bis 1,1, besonders bevorzugt 0,2 bis 0,9 und ganz besonders bevorzugt 0,3 bis 0,7 pro Polymermolekül beträgt.

Desweiteren bevorzugt sind als hydrophobe Polymerharze HP' Polyurethanharze.

In einer besonders bevorzugten Ausführungsform der Erfindung ist das eingesetzte Polyurethanharz aufgebaut aus:
(b1) einem gegebenenfalls polymerisierbare Doppelbindungen aufweisenden Polyester- oder Polyetherpolyol mit einem zahlenmittleren Molekulargewicht Mn von 400 bis 5000 Dalton oder einem Gemisch aus solchen Polyether- und Polyesterpolyolen,
(b2) einem Di- und/oder Polyisocyanat oder einem Gemisch aus Di- und/oder Polyisocyanaten,
(b3) gegebenenfalls einer Verbindung, die mindestens eine gegenüber Isocyanatgruppen reaktive und mindestens eine zur Anionenbildung befähigte Gruppe im Molekül aufweist, oder einem Gemisch aus solchen Verbindungen,
(b4) gegebenenfalls einer Verbindung, die neben einer polymerisierbaren Doppelbindung mindestens noch eine gegenüber Isocyanatgruppen reaktive Gruppe enthält, oder einem Gemisch aus solchen Verbindungen,
(b5) gegebenenfalls einer Verbindung, die gegenüber Isocyanatgruppen reaktive Gruppe und mindestens eine Polyoxyalkylengruppe im Molekül aufweist, oder ein Gemisch aus solchen Verbindungen und
(b6) gegebenenfalls mindestens eine Hydroxyl- und/oder Aminogruppe enthaltende organische Verbindung mit einem Molekulargewicht von 60 bis 600 Dalton oder ein Gemisch aus solchen Verbindungen.

Die erfindungsgemäßen Beschichtungsmittel zeichnen sich im Vergleich zu den Beschichtungsmitteln der noch nicht veröffentlichten Patentanmeldung P 195 42 626.6 durch ein verbessertes Trocknungsverhalten bei gleichermaßen gutem Glanz, guter Fülle, geringer Kochemeigung, durch eine verbesserte Spritzsicherheit aus.

### Durchführung der Erfindung

**Die Komponenten (I) und (II) des erfindungsgemäßen Beschichtungsmittels gemäß der noch nicht veröffentlichten Patentanmeldung P 195 42 626.6**

### Die Komponente (1)

Die Komponente (I) des erfindungsgemäßen Beschichtungsmittels enthält als Bindemittel (A)
(A1) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Acrylatcopolymerisat (A1), bevorzugt mit einem zahlenmittleren Molekulargewicht Mn zwischen 1.000 und 30.000 Dalton, einer OH-Zahl von 40 bis 200 mg KOH/g und einer Säurezahl von 5 bis 150 mg KOH/g, und/oder
(A2) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Polyesterharz (A2), bevorzugt mit einem zahlenmittleren Molekulargewicht Mn zwischen 1.000 und 30.000 Dalton, einer OH-Zahl von 30 bis 250 mg KOH/g und einer Säurezahl von 5 bis 150 mg KOH/g, und/oder
(A3) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureanionengruppen überführbar sind, enthaltendes Polyurethanharz (A3), bevorzugt mit einem zahlenmittleren Molekulargewicht Mn zwischen 1.000 und 30.000 Dalton, einer OH-Zahl von 20 bis 200 mg KOH/g und einer Säurezahl von 5 bis 150 mg KOH/g; und/oder
(A4) gegebenenfalls ein weiteres Bindemittel.

Als Hydroxylgruppen und Säuregruppen enthaltendes Acrylatcopolymerisat (A1) sind alle Acrylatcopolymerisate, bevorzugt mit den angegebenen OH-Zahlen, Säurezahlen und Molekulargewichten, geeignet. Bevorzugt werden Acrylatcopolymerisate eingesetzt, die als 50 %ige Lösung in Ethoxyethylpropionat bei 23 Grad C eine Viskosität <= 6,0 dPa.s aufweisen.

Bevorzugt werden als Komponente (A1) die in P 195 42 626.6 beschriebenen Acrylatcopolymerisate eingesetzt, die erhältlich sind durch Polymerisation in einem organischen Lösemittel oder einem Lösemittelgemisch und in Gegenwart mindestens eines Polymerisationsinitiators von
a1) einem von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren,
a2) einem mit (a1), (a3), (a4), (a5) und (a6) copolymerisierbaren, von (a5) verschiedenen, ethylenisch ungesättigten Monomer, das mindestens eine Hydroxylgruppe pro Molektil trägt und im wesentlichen säuregruppenfrei ist, oder einem Gemisch aus solchen Monomeren,
a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und
a4) gegebenenfalls einem oder mehreren Vinylestern von in alpha-Stellung verzweigten Monocarbonsäuren mit 5 bis 18 C-Atomen je Molekül und/oder
a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird, sowie
a6) gegebenenfalls einem mit (a1), (a2), (a3), (a4), und (a5) copolymerisierbaren, von (a1), (a2), (a4) und (a5) verschiedenen, im wesentlichen säuregruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das Polyacrylatharz (A1) die gewünschte OH-Zahl, Säurezahl und das gewünschte Molekulargewicht aufweist.

Zur Herstellung der erfindungsgemäß eingesetzten Polyacrylatharze und zur Auswahl der Monomerkomponenten (a1) bis (a6) wird auf die noch nicht veröffentlichte deutsche Patentanmeldung P 195 42 626.6 verwiesen.

Besonders bevorzugt eingesetzte Acrylatharze werden erhalten durch Polymerisation von
(a1) 20 bis 60 Gew.-%, bevorzugt 30 bis 50 Gew.-%, der Komponente (a1),
(a2) 10 bis 40 Gew.-%, bevorzugt 15 bis 35 Gew.%, der Komponente (a2),
(a3) 1 bis 15 Gew.-%, bevorzugt 2 bis 8 Gew.%, der Komponente (a3),
(a4) 0 bis 25 Gew.-%, bevorzugt 0 bis 15 Gew.-%, der Komponente (a4),
(a5) 0 bis 25 Gew-%, bevorzugt 0 bis 15 Gew.-%, der Komponente (a5) und
(a6) 5 bis 30 Gew- %, bevorzugt 10 bis 20 Gew.-%, der Komponente (a6),
wobei die Summe der Gewichtsanteile der Komponenten (a1) bis (a6) jeweils 100 Gew.-% beträgt.

Bevorzugt wird das Polyacrylatharz (A1) gemäß einem in der noch nicht veröffentlichten Patentanmeldung P 195 42 626.6 beschriebenen Zweistufenverfahren hergestellt, da so die resultierenden wäßrigen Beschichtungsmittel eine bessere Verarbeitbarkeit aufweisen.

Gemäß der noch nicht veröffentlichten deutschen Patentanmeldung P 195 42 626.6 werden bevorzugt als Komponente (A2) Polyester eingesetzt, die erhältlich sind durch Umsetzung von
p1) Potycarbonsäuren oder deren veresterungsfähigen Derivaten, gegebenenfalls zusammen mit Monocarbonsäuren,
p2) Polyolen, gegebenenfalls zusammen mit Monoolen,
p3) gegebenenfalls weiteren modifizierenden Komponenten und
p4) gegebenenfalls einer mit dem Reaktionsprodukt aus (p1),(p2) und gegebenenfalls (p3) reaktionsfähigen Komponente.

Bezüglich der Komponenten (p1) bis (p4) und der Herstellung der Polyester (A2) sei auf die Patentanmeldung P 195 42 626.6 verwiesen.
Besonders bevorzugt werden als Komponente (A2) Polyester eingesetzt, die nach einem in P 195 42 626.6 beschriebenen zweistufigen Verfahren hergestellt worden sind.

Es ist gemäß der noch nicht veröffentlichten deutschen Patentanmeldung P 195 42 626.6 gegebenenfalls möglich, daß das Polyacrylatharz (A1) zumindest teilweise in Gegenwart des Polyesters (A2) hergestellt wird. Vorteilhafterweise werden in diesem Fall mindestens 20 Gew.-% und besonders vorteilhafterweise 40 bis 80 Gew.% der Komponente (A1) in Gegenwart der Komponente (A2) hergestellt.

Als geeignete Polyurethanharze (A3) werden gemäß der noch nicht veröffentlichten Patentanmeldung P 195 42 626.6 beispielsweise in den folgenden Schriften beschriebene Polyurethanharze in Komponente (I) eingesetzt: EP-A-355 433, DE-A-35 45 618, DE-A-38 13 866. DE-A-32 10 051, DE-A-26 24 442, DE-A-37 39 332, US-A-4,719,132, EP-A-89 497, US-A-4,558,090, US-A-4,489,135, DE-A-36 28 124, EP-A-158 099, DE-A-29 26 584, EP-A-195 931, DE-A-33 21 180 und DE-A-40 05 961.

In der Komponente (I) werden vorzugsweise Polyurethanharze eingesetzt, die durch Umsetzung von isocyanatgruppenhaltigen Präpolymeren mit gegenüber Isocyanatgruppen reaktiven Verbindungen herstellbar sind, wie detailliert in P 195 42 626.6 beschrieben.

Als Komponente (A4) geeignet sind gemäß der noch nicht veröffentlichten Patentanmeldung P 195 42 626.6 alle mit den übrigen Bestandteilen der Komponente (I) verträglichen, wasserverdünnbaren Bindemittel, beispielsweise acrylierte Polyurethanharze und/oder Polyesteracrylate.

Bevorzugt enthält die Komponente (I) als Bindemittel (A)
(A1) mindestens 20 Gew.-% mindestens eines Acrylatcopolymerisats (A1),
(A2) 0 bis 30 Gew.-% mindestens eines Polyesters (A2),
(A3) 0 bis 80 Gew.-% mindestens eines Polyurethanharzes (A3) und
(A4) 0 bis 10 Gew.-% mindestens eines weiteren Bindemittels (A4),
wobei die Summe der Gewichtsanteile der Komponenten (A1) bis (A4) jeweils 100 Gew.-% beträgt.

Die Komponente (I) kann als Bestandteil (B) alle lacküblichen Pigmente in Anteilen von 0 bis 60 Gew.-%, bezogen auf Komponente I, enthalten. Dabei können sowohl die in wäßrigen Beschichtungsmitteln üblichen Pigmente, die mit Wasser nicht reagieren bzw. sich in Wasser nicht lösen, als auch die üblicherweise in konventionellen Beschichtungsmitteln eingesetzten Pigmente eingesetzt werden. Die Pigmente können aus anorganischen oder organischen Verbindungen bestehen und können effekt- und/oder farbgebend sein..Das erfindungsgemäße Beschichtungsmittel gewährleistet daher aufgrund dieser Vielzahl geeigneter Pigmente eine universelle Einsatzbreite der Beschichtungsmittel und ermöglicht die Realisierung einer Vielzahl von Farbtönen
Als Effektpigmente können Metallplättchenpigmente, wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden. Beispiele für geeignete anorganische farbgebende Pigmente sind Titandioxid, Eisenoxide, Sicotransgelb und Ruß. Beispiele für geeignete organische farbgebende Pigmente sind Indanthrenblau, Cromophthalrot, lrgazinorange und Heliogengrün.

Als Bestandteil (C) enthält die Komponente (I) mindestens ein organisches, gegebenenfalls wasserverdünnbares Lösemittel. Solche Lösemittel können auch an der Reaktion mit der vernetzenden Komponente (II) teilnehmen und somit als Reaktivverdünner wirken und sind in der noch nicht veröffentlichten Patentanmeldung P 195 42 626.6 im Detail beschrieben.

Als Bestandteil (D) enthält die Komponente (I) gegebenenfalls mindestens ein Neutralisationsmittel. Beispiele für geeignete Neutralisationsmittel sind in P 195 42 626.6 beschrieben. Die Neutralisation kann in organischer Phase oder in wäßriger Phase erfolgen.Das Neutralisationsmittel kann dabei der Komponente (I) und/oder (II) und/oder (III) zugesetzt werden. Bevorzugt wird das Neutralisationsmittel aber der Komponente (III) zugesetzt.

Als Bestandteil (E) kann die Komponente (I) mindestens ein rheologiesteuerndes Additiv enthalten. Beispiele für rheologiesteuernde Additive sind in der noch nicht veröffentlichten Patentanmeldung P 195 42 626.6 genannt.

Die Komponente (I) kann außerdem mindestens noch ein weiteres übliches Lackadditiv enthalten. Beispiele für derartige Additive sind Entschäumer, Dispergierhilfsmittel, Emulgatoren, und Verlaufshilfsmittel.

Bevorzugt werden zur Herstellung der erfindungsgemäßen Beschichtungsmittel Komponenten (I) eingesetzt, die aus
(A) 20 bis 90 Gew.-%, bevorzugt 35 bis 80 Gew.-%, des Bindemittels (A),
(B) 0 bis 60 Gew.-% mindestens eines Pigments und/oder Füllstoffs,
(C) 5 bis 50 Gew.-%, bevorzugt 10 bis 40 Gew.-%, mindestens eines organischen, gegebenenfalls wasserverdünnbaren Lösemittels und
(D) 0 bis 20 Gew.-%, bevorzugt 0,1 bis 10 Gew.-%, mindestens eines Neutralisationsmittels
(E) 0 bis 20 Gew.-%, bevorzugt 2 bis 10 Gew.-%, mindestens eines üblichen Hilfs- und/oder Zusatzstoffes
bestehen, wobei die Summe der Gewichtsanteile der Komponenten (A) bis (E) jeweils 100 Gew.-%, bezogen auf die Komponente (I); beträgt.

### Die Komponente (II)

Es ist bevorzugt, daß die Lackkomponente (II) als Venietzungsmittel mindestens ein gegebenfalls in einem oder mehreren organischen, gegebenenfalls wasserverdünnbaren Lösemitteln gelöstes oder dispergiertes, nicht-blockiertes Di- und/oder Polyisocyanat (F1) und gegebenenfalls mindestens ein weiteres Vernetzungsmittel, ausgewählt aus mindestens einer Epoxidverbindung (F2) mit mindestens zwei Epoxidgruppen pro Molekül und/oder mindestens einem Aminoplastharz (F3), enthält.

Bei der Polyisocyanatkomponente (F1) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPas (bei 23 Grad C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessem und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Butylacetat und ähnliches.

Beispiele für geeignete Isocyanate sind in der noch nicht veröffentlichten deutschen Patentanmeldung P 195 42 626.6 beschrieben. Vorzugsweise werden aliphatische oder cycloaliphatische Polyisocyanate, wie in P 195 42 626.6 angeführt, eingesetzt. Die Polyisocyanatkomponente (F1) kann im übrigen auch aus beliebigen Gemischen der beispielhaft genannten Polyisocyanate bestehen. In einer weiteren Ausführungsform der Erfindung besteht die Polyisocyanatkomponente (F1) aus einem Gemisch aus blockierten Di- und/oder Polyisocyanaten und den schon genannten nichtblockierten Di- und/oder Polyisocyanaten wie detailliert in P 195 42 626.6 beschrieben. Die Polyisocyanatkomponente (F1) wird in den erfindungsgemäßen Beschichtungsmitteln vorteilhafterweise in einer Menge von mindestens 70 Gew.%, besonders bevorzugt in einer Menge von 80 bis 100 Gew.-%, bezogen auf das Gesamtgewicht des Vernotzungsmittets (F), eingesetzt.

Beispiele für geeignete Polyepoxide (F2) sind alle bekannten aliphatischen und/oder cycloaliphatischen und/oder aromatischen Polyepoxide, beispielsweise auf Basis Bisphenol-A oder Bisphenol-F.
Als Komponente (F2) geeignet sind beispielsweise auch die im Handel unter den Bezeichnungen Epikote ®der Firma Shell, Denacol ® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).
Die Polyepoxidkomponente (F2) wird in den erfindungsgemäßen Beschichtungsmitteln vorteilhafterweise in einer Menge von 0 bis 30 Gew.%, besonders bevorzugt in einer Menge von 2 bis 20 Gew.-%, bezogen auf das Gesamtgewicht des Vernetzungsmittels (F), eingesetzt.

Beispiele für geeignete Aminoplastharze (F3) sind iminofunktionelle Melaminharze, wie die im Handel unter dem Namen Cymel ® 325 der Firma Cyanamid und Luwipal ® LR 8839 der Firma BASF AG erhältlichen Produkte. Das Aminoplastharz (F3) wird in den erfindungsgemäßen Beschichtungsmitteln vorteilhafterweise in einer Menge von 0 bis 30 Gew.%, besonders bevorzugt in einer Menge von 2 bis 20 Gew.-%, bezogen auf das Gesamtgewicht des Vernetzungsmittels (F), eingesetzt.

Die Bestandteile (G) und (H) der Lackkomponente (II) entsprechen den Bestandteilen (C) und (E) der Lackkomponente (I).

Bevorzugt werden zur Herstellung der erfindungsgemäßen Beschichtungsmittel Komponenten (II) eingesetzt, die aus
(F) 50 bis 100 Gew.-%, bevorzugt 60 bis 90 Gew.-%, mindestens eines Vernetzungsmittels (F),
(G) 0 bis 50 Gew.-%, bevorzugt 10 bis 40 Gew.-%, mindestens eines organischen, gegebenenfalls wasserverdünnbaren Lösemittels und
(H) O bis 20 Gew.-%, bevorzugt 0 bis 10 Gew.-% mindestens eines üblichen Hilfs- und/oder Zusatzstoffes,
bestehen, wobei die Summe der Gewichtsanteile der Komponenten (F) bis (H) jeweils 100 Gew-%, bezogen auf die Komponente (II), beträgt.

### Die Komponente (III)

Die Komponente (III) der erfindungsgemäßen Beschichtungsmittel enthält als erfindungswesentliches Bestandteil mindestens eine wäßrige Dispersion eines hydrophilierten Polymerharzes HP, das nach einem ein- oder mehrstufigen Verfahren hergestellt wird.

Das einstufige Verfahren zur Herstellung der wäßrigen Dispersion des hydrophilierten Polymerharzes HP ist dadurch gekennzeichnet, daß
in entionisiertem Wasser eine Präemulsion PE, enthaltend Mikroteilchen, bestehend aus einem hydrophoben Polymerharz HP' und den monomeren Bestandteilen
(aa1) einen von (aa2), (aa3) und (aa4) verschiedenen und mit (aa2), (aa3) und (aa4) copolymerisierbaren, im wesentlichen carboxylgruppenfreien (Meth)acrylsäureester oder einem Gemisch aus solchen Monomeren,
(aa2) ein mit (aa1), (aa3) und (aa4) copolymerisierbares, ethylenisch ungesättigtes Monomer, das mindestens eine Hydroxylgruppe pro Molekül trägt und im wesentlichen carboxylgruppenfrei ist,
(aa3) gegebenenfalls ein mit (aa1), (aa2) und (aa4) copolymerisierbares, von (aa1), (aa2) und (aa4) verschiedenes, im wesentlichen carboxylgruppenfreies, ethylenisch ungesättigtes Monomer oder einem Gemisch aus solchen Monomeren, sowie
(aa4) ein mindestens eine Carboxylgruppe pro Molekül tragendes, mit (aa1), (aa2) und (aa3) copolymerisierbares, ethylenisch ungesättigtes Monomer oder ein Gemisch aus solchen Monomeren,
durch hohe Scherbelastung der wäßrigen Dispersion des hydrophoben Polymerharzes HP' und der wäßrigen Emulsion der monomeren Bestandteile hergestellt wird und anschließend die polymerisierbaren Bestandteile der Präemulsion PE polymerisiert werden.

Das mehrstufige Verfahren zur Herstellung der wäßrigen Dispersion des hydrophilierten Polymerharzes HP ist dadurch gekennzeichnet, daß
I. in entionisiertem Wasser eine Präemulsion PE, enthaltend Mikroteilchen, bestehend aus dem hydrophoben Polymerharz HP' und den monomeren Bestandteilen
   (aa1) einem von (aa2) und (aa3) verschiedenen und mit (aa2) und (aa3) copolymerisierbaren, im wesentlichen carboxylgruppenfreien (Meth)acrylsäureester oder einem Gemisch aus solchen Monomeren,
   (aa2) einem mit (aa1) und (aa3) copolymerisierbaren, ethylenisch ungesättigten Monomeren, das mindestens eine Hydroxylgruppe pro Molekül trägt und im wesentlichen carboxylgruppenfrei ist, sowie
   (aa3) gegebenenfalls einem mit (aa1) und (aa2) copolymerisierbaren, von (aa1) und (aa2) verschiedenen, im wesentlichen carboxylgruppenfreien, ethylenisch ungesättigten Monomeren oder einem Gemisch aus solchen Monomeren,
   durch hohe Scherbelastung der wäßrigen Dispersion des hydrophoben Polymerharzes HP' und der wäßrigen Emulsion der monomeren Bestandteile hergestellt wird und anschließend mit der Polymerisation der polymerisierbaren Bestandteile der Präemulsion PE begonnen wird und anschließend
II. während und/oder nach Abschluß, jedoch nicht gleichzeitig mit Beginn, der Polymerisation der polymerisierbaren Bestandteile der Präemulsion PE ein Monomerengemisch, enthaltend
   (aa1) einen von (aa2), (aa3) und (aa4) verschiedenen und mit (aa2), (aa3) und (aa4) copolymerisierbaren, im wesentlichen carboxylgruppenfreien (Meth)acrylsäureester oder einem Gemisch aus solchen Monomeren,
   (aa2) ein mit (aa1), (aa3) und (aa4) copolymerisierbares, ethylenisch ungesättigtes Monomer, das mindestens eine Hydroxylgruppe pro Molekül trägt und im wesentlichen carboxylgruppenfrei ist,
   (aa3) gegebenenfalls ein mit (aa1), (aa2) und (aa4) copolymerisierbares, von (aa1), (aa2) und (aa4) verschiedenes, im wesentlichen carboxylgruppenfreies, ethylenisch ungesättigtes Monomer oder einem Gemisch aus solchen Monomeren, sowie
   (aa4) ein mindestens eine Carboxylgruppe pro Molekül tragendes, mit (aa1), (aa2) und (aa3) copolymerisierbares, ethylenisch ungesättigtes Monomer oder ein Gemisch aus solchen Monomeren
   im Zulauf zugegeben wird und anschließend polymerisiert wird.

Das für die Herstellung der Präemulsion eingesetzte hydrophobe Polymermerharz HP' ist vorzugsweise ein Polyadditionsharz und/oder ein Polykondensationsharz.
Als Polyadditionsharze HP' bevorzugt sind Polyurethane, als Polykondensationsharze HP' bevorzugt sind Polyester. Besonders bevorzugt werden Polyadditions- und/oder Polykondensationsharze HP' eingesetzt, die im statistischen Mittel 0,05 bis 1,1, bevorzugt 0,2 bis 0,9 und besonders bevorzugt 0,3 bis 0,7 polymerisierbare Doppelbindungen enthalten. Ganz besonders bevorzugt werden als Polymerharze HP' Polyurethanharze gemäß DE-A-40 10 176 eingesetzt, die vorzugsweise aus den folgenden Komponenten hergestellt werden:
(b1) einem gegebenenfalls polymerisierbare Doppelbindungen aufweisenden Polyester- oder Polyetherpolyol mit einem zahlenmittleren Molekulargewicht Mn von 400 bis 5000 Dalton oder einem Gemisch aus solchen Polyether- und Polyesterpolyolen,
(b2) einem Di- und/oder Polyisocyanat oder einem Gemisch aus Di- und/oder Polyisocyanaten,
(b3) gegebenenfalls einer Verbindung, die mindestens eine gegenüber Isocyanatgruppen reaktive und mindestens eine zur Anionenbildung befähigte Gruppe im Molekül aufweist, oder einem Gemisch aus solchen Verbindungen,
(b4) gegebenenfalls einer Verbindung, die neben einer polymerisierbaren Doppelbindung mindestens noch eine gegenüber Isocyanatgruppen reaktive Gruppe enthält, oder einem Gemisch aus solchen Verbindungen,
(b5) gegebenenfalls einer Verbindung, die gegenüber Isocyanatgruppen reaktive Gruppe und mindestens eine Polyoxyalkylengruppe im Molekül aufweist, oder ein Gemisch aus solchen Verbindungen und
(b6) gegebenenfalls mindestens eine Hydroxyl- und/oder Aminogruppe enthaltende organische Verbindung mit einem Molekulargewicht von 60 bis 600 Dalton oder ein Gemisch aus solchen Verbindungen.

Das Polyurethanharz HP' gemäß DE-A-40 10 176 soll dabei ein zahlenmittleres Molekulargewicht Mn von 200 bis 30.000, bevorzugt von 1000 bis 5000 Dalton aufweisen. Das Molekulargewicht des Polyurethanharzes HP' kann, wie dem Fachmann bekannt, insbesondere durch das Mengenverhältnis und die Funktionalität der eingesetzten Komponenten (b1) bis (b6) gesteuert werden.
Das Polyurethanharz HP' kann sowohl in Substanz als auch in organischen Lösemitteln hergestellt werden.
Das Polyurethanharz HP' kann durch gleichzeitige Umsetzung aller Ausgangsverbindungen hergestellt werden. In manchen Fällen ist es jedoch zweckmäßig, das Polyurethanharz HP' stufenweise herzustellen. So ist es beispielsweise möglich, aus den Komponenten (b1) und (b2) ein isocyanatgruppenhaltiges Präpolymerisat herzustellen, das dann mit der Komponente (b4) weiter umgesetzt wird.
Weiter ist es möglich aus den Komponenten (b1), (b2), (b4) und gegebenenfalls (b3) und (b5) ein isocyanatgruppenhaltiges Präpolymerisat herzustellen, das dann mit der Komponente (b6) zu einem höhermolekularen Polyurethanharz HP' umgesetzt wird.
In den Fällen, in denen als Komponente (b4) eine Verbindung eingesetzt wird, die nur eine gegenüber Isocyanatgruppen reaktive Gruppe enthält, kann in einer ersten Stufe aus (b2) und (b4) ein isocyanatgruppenhaltigen Vorprodukt hergestellt werden, das anschließend mit den weiteren Komponenten weiter umgesetzt werden kann.
Die Umsetzung der Komponenten (b1) bis (b6) kann zweckmäßigerweise in Gegenwart von Katalysatoren, wie beispielsweise Dibutylzinndilaurat, Dibutylzinnmaleat, tertiären Amine oder anderen, durchgeführt werden.
Die einzusetzenden Mengen an Komponenten (b1), (b2), (b3), (b4), (b5) und (b6) ergeben sich aus dem anzustrebenden Molekulargewicht und der anzustrebenden Säurezahl. Die polymerisierbaren Doppelbindungen können durch Verwendung von polymerisierbare Doppelbindungen aufweisende Komponenten (b1) und/oder Komponenten (b4) in das Polyurethanharz HP' eingeführt werden. Es ist bevorzugt die polymerisierbaren Doppelbindungen über die Komponente (b4) einzuführen.

Die detaillierte Beschreibung der einzelnen Komponenten (b1) bis (b6) sowie ihrer bevorzugten Varianten kann der DE-A-40 10 176 entnommen werden.

In weiteren bevorzugten Ausführungsformen der Erfindung besteht die Komponente (b1) aus bis zu 100 Gew.-% alpha,omega-Polymethacrylatdiolen, wie sie beipielsweise in EP-A-0 622 378 beschrieben sind, und/oder enthält die Komponente (b4) eine Allylethergruppe, Acrylat- und/oder Methacrylatgruppe als polymerisierbare Doppelbindung.

Nach dem einstufigen erfindungsgemäßen Verfahren wird in entionisiertem Wasser eine Präemulsion PE, enthaltend Mikroteilchen, bestehend aus Emulgatoren, einem hydrophoben Polymerharz HP'. und den monomeren Bestandteilen
(aa1) einen von (aa2), (aa3) und (aa4) verschiedenen und mit (aa2), (aa3) und (aa4) copolymerisierbaren, im wesentlichen carboxylgruppenfreien (Meth)acrylsäureester oder einem Gemisch aus solchen Monomeren,
(aa2) ein mit (aa1), (aa3) und (aa4) copolymerisierbares, ethylenisch ungesättigtes Monomer, das mindestens eine Hydroxylgruppe pro Molekül trägt und im wesentlichen carboxylgruppenfrei ist,
(aa3) gegebenenfalls ein mit (aa1), (aa2) und (aa4) copolymerisierbares, von (aa1), (aa2) und (aa4) verschiedenes, im wesentlichen carboxytgruppenfreies, ethylenisch ungesättigtes Monomer oder einem Gemisch aus solchen Monomeren, sowie
(aa4) ein mindestens eine Carboxylgruppe pro Molekül tragendes, mit (aa1), (aa2) und (aa3) copolymerisierbares, ethylenisch ungesättigtes Monomer oder ein Gemisch aus solchen Monomeren
durch hohe Scherbelastung der wäßrigen Dispersion des hydrophoben Polymerharzes HP' und der wäßrigen Emulsion der monomeren Bestandteile hergestellt und anschließend die polymerisierbaren Bestandteile der Präemulsion PE unter Verwendung radikalbildender Polymerisationsinitiatoren polymerisiert.

Bevorzugt werden die monomeren Bestandteile in Mengen von:
30 bis 98 Gew.-% (aa1),
1 bis 30 Gew.-% (aa2),
0 bis 20 Gew.-% (aa3) sowie
1 bis 20 Gew.-% (aa4)
eigesetzt, wobei die Summe der Komponenten (aa1) bis (aa4) 100 Gew.-% ausmacht.

Als monomere Bestandteile (aa1) können beispielsweise eingesetzt werden: Cycloalkyl(meth)acrylate, wie Cyclopentyl(meth)acrylat oder bevorzugt Cyclohexyl(meth)acrylat oder tert.-Butylcyclohexyl(meth)acrylat, Isobornyl (meth)acrylat, Phenyl(meth)acrylat, Phenylalkyl(meth)acrylate, Naphthyl(meth)acrylat, Alkylacrylate oder Alkylmethacrylate mit bis zu 20 Kohlenstoffatomen im Esterrest, wie beispielsweise Methyl-, Ethyl-, Propyl-, Butyl-, Pentyl-, Hexyl-, Octyl-, Ethylhexyl- Decyl- Stearyl- und Laurylacrylat und -methacrylat oder Gemische aus diesen Monomeren. Als monomere Bestandteile (aa2) können beispielweise eingesetzt werden: Hydroxyalkylester der Acrylsäure, Methacrylsäure oder einer anderen alpha,beta-ungesättigten Carbonsäure, wobei sich diese Ester von einem Alkylenglykol, das mit der Säure verestert ist, ableiten können oder durch eine Umsetzung der Säure mit einem Alkylenoxid erhalten werden können. Weiterhin können die monomeren Bestandteile (aa2) Einheiten von Polyalkylenoxid, z.B. Polyethylenoxid oder Polypropylenoxid, Polylacton oder Polylactam mit endständigen Hydroxylgruppen tragen.
Als Komponente (aa2) werden vorzugsweise Hydroxyalkylester der Acrylsäure und Methacrylsäure, in denen die Hydroxyalkylgruppe bis zu 4 Kohlenstoffatome enthält, oder Mischungen aus diesen Hydroxyalkylestern eingesetzt. Als Beispiele für derartige Hydroxylalkylester werden 2-Hydroxyethyl(meth)acrylat, 2-Hydroxypropyl(meth)acrylat, 3-Hydroxypropyl(meth)acrylat, 3-Hydroxybutyl(meth)acrylat und 4-Hydroxybutyl(meth)acrylat genannt. Entsprechende Ester von anderen alpha,beta-ungesättigten Säuren, wie z.B. Ethacrylsäure, Crotonsäure und ähnliche Säuren mit bis zu 6 Kohlenstoffatomen pro Molekül können auch eingesetzt werden. Weiterhin können als Monomerbstandteile (aa2) beispielsweise Addukte aus (Meth)acrylsäure und Versaticsäureglycidylester eingesetzt werden.
Als gegebenenfalls anwesende Monomerbestandteile (aa3) können beispielsweise eingesetzt werden: vinylaromatische Kohlenwasserstoffe, wie Styrol, alpha-Methylstyrol oder Vinyltoluol, Acryl- und Methacrylamid sowie Acryl- und Methacrylnitril oder Gemische aus diesen Stoffen. Als Komponente (aa4) werden vorzugsweise Acrylsäure und/oder Methacrylsäure eingesetzt, wobei auch andere ethylenisch ungesättigte Säuren mit bis zu 6 Kohlenstoffatomen im Molekül eingesetzt werden können. Als Beispiele für solche Säuren werden Ethacrylsäure, Crotonsäure, Maleinsäure, Fumarsäure und ltaconsäure genannt.

In der wäßrigen Phase sind weiterhin Emulgatoren, wie sie beispielsweise bei der konventionellen Emulsionspolymerisation eingesetzt werden, z.B. Aminsalze oder Metallsalze der Dodecylbenzolsulfonsäure, Natriumdialkylsulfosuccinat, ethoxylierte Alkylphenole oder andere dem Fachmann bekannte Emulgierhilfsmittel, in Mengen zwischen 0,1 und 10 Gew.-%, vorzugsweise zwischen 0,5 und 5 Gew.-%, bezogen auf die Präemulsion PE, anwesend.
Weiterhin können geringe Mengen inerter organischer Lösemittel gemeinsam mit dem Polymerharz HP', die zur Erniedrigung der Viskosität des Polymerharzes HP' dienen; eingesetzt werden, die nach dem Mischen in der wäßrigen Phase anwesend sind.

Zur Erzeugung der hohen Scherbelastung bei der Herstellung der Präemulsion PE, die zur Dispergierung des Polymerharzes HP' und der monomeren Komponenten (aa1) bis (aa4) in Mikropartikel führt, werden Vorrichtungen, wie sie beispielsweise in EP-B-0 401 565 oder in DE-A-195 10 651 beschrieben sind, angewendet. Z.B. kann der in EP-B-0 401 565 beschriebene Microfluidizer® der Firma Microfluidics Corp., Newton, Massachusetts, U.S.A. verwendet werden.

Als Polymerisationsinitiatoren können sowohl wasserlösliche als auch öllösliche Radikalbildner eingesetzt werden. Bevorzugt werden wasserlösliche Radikalbildner, wie beispielsweise Peroxiverbindungen, wie Ammoniumperoxidisulfat, Natriumperoxidisulfat oder Wasserstoffperoxid, sowie Redoxsysteme, wie beispielsweise Ammoniumperoxidisulfat mit Natriummetabisulfit, eingesetzt.

Das mehrstufige erfindungsgemäße Verfahren wird folgendermaßen durchgeführt:
in der I. Stufe wird die Präemulsion PE aus einer wäßrigen Phase, dem hydrohoben Polymerharz HP' und den monomeren Bestandteilen
   (aa1) einem von (aa2) und (aa3) verschiedenen und mit (aa2) und (aa3) copolymerisierbaren, im wesentlichen carboxylgruppenfreien (Meth)acrylsäureester oder einem Gemisch aus solchen Monomeren,
   (aa2) einem mit (aa1) und (aa3) copolymerisierbaren, ethylenisch ungesättigten Monomeren, das mindestens eine Hydroxylgruppe pro Molekül trägt und im wesentlichen carboxylgruppenfrei ist, sowie
   (aa3) gegebenenfalls einem mit (aa1) und (aa2) copolymerisierbaren von (aa1) und (aa2) verschiedenen, im wesentlichen carboxylgruppenfreien, ethylenisch ungesättigten Monomeren öder einem Gemisch aus solchen Monomeren
durch Mischen unter hoher Scherbelastung hergestellt.

Bevorzugt werden die monomeren Bestandteile in Mengen von
60 bis 99 Gew.-% (aa1),
1 bis 20 Gew.-% (aa2) und
0 bis 20 Gew.% (aa3)
eingesetzt, wobei die Summe der monomeren Bestandteile (aa1) bis (aa3) 100 Gew.-% ausmacht.

In der I. Stufe des erfindurigsgemäßen Verfahrens werden nach der Herstellung der oben beschriebenen Präemulsion PE, die polymerisierbaren Bestandteile (aa1), (aa2) und gegebenenfalls (aa3) der Präemulsion PE unter Verwendung der schon genannten radikalbildenden Polymerisationsinitiatoren polymerisiert.

In einer bevorzugten Ausführungsform des Verfahrens wird bei der Durchführung der I. Stufe im Reaktionsgefäß entionisiertes Wasser vorlegt und auf eine Temperatur zwischen vorzugsweise 40 und 95 Grad C aufgeheizt, wobei sich die Temperatur an der Zerfallsrate des Polymerisationsinitiators orientiert. Danach wird eine wäßrige Phase, enthaltend den Polymerisationsinitiator, sowie die wäßrige Präemulsion PE in separaten Zuläufen vorzugsweise gleichzeitig zudosiert. Der Dosiervorgang dauert zwischen 0,5 und 8 Stunden, bevorzugt zwischen 1 und 4 Stunden.

Während und/oder nach Abschluß der Polymerisation der polymerisierbaren Bestandteile der Präemulsion PE, nicht jedoch gleichzeitig mit Beginn des bei der Durchführung der I. Stufe beschriebenen Zulaufs der Präemulsion PE in das Reaktionsgefäß wird in der II. Stufe des erfindungsgemäßen Vefahrens ein Monomerengemisch, gegebenenfalls enthaltend mindestens einen bei der Herstellung der Präemulsion PE beschriebenen bekannten Emulgatoren für die Emulsionspolymerisation, und die monomeren Bestandteile
(aa1) einen von (aa2), (aa3) und (aa4) verschiedenen und mit (aa2), (aa3) und (aa4) copolymerisierbaren, im wesentlichen carboxylgruppenfreien (Meth)acrylsäureester oder einem Gemisch aus solchen Monomeren,
(aa2) ein mit (aa1), (aa3) und (aa4) copolymerisierbares, ethylenisch ungesättigtes Monomer, das mindestens eine Hydroxylgruppe pro Molektil trägt und im wesentlichen carboxylgruppenfrei ist,
(aa3) gegebenenfalls ein mit (aa1), (aa2) und (aa4) copolymerisierbares, von (aa1), (aa2) und (aa4) verschiedenes, im wesentlichen carboxylgruppenfreies, ethylenisch ungesättigtes Monomer oder einem Gemisch aus solchen Monomeren, sowie
(aa4) ein mindestens eine Carboxylgruppe pro Molekül tragendes, mit (aa1), (aa2) und (aa3) copolymerisierbares, ethylenisch ungesättigtes Monomer oder ein Gemisch aus solchen Monomeren
im Zulauf zugegeben.

Die schon bei der Herstellung der Präemulsion PE im einstufigen Verfahren beschriebenen Monomeren (aa1) bis (aa3) sind vorzugsweise mit den in der I. Stufe eingesetzten Monomeren weitestgehend identisch. Bevorzugt werden die monomeren Bestandteile in der II. Stufe in Mengen von:
30 bis 98 Gew.-% (aa1),
1 bis 30 Gew.-% (aa2),
0 bis 20 Gew.-% (aa3) und
1 bis 20 Gew.-% (aa4)
eingesetzt, wobei die Summe der monomeren Bestandteile (aa1) bis (aa4) 100 Gew.-% ausmacht.

Der Zulauf der in der II. Stufe eingesetzten Monomeren dauert im allgemeinen zwischen 0,5 und 6 Stunden.

Nach Abschluß der Monomerzugabe wird die wäßrige Dispersion noch 0,5 bis 4 Stunden zur Nachreaktion bei 60 bis 95 Grad C gehalten.

Die resultierende wäßrige Dispersion der hydrophilierten Polymerharzes HP hat einen Feststoffgehalt zwischen 10 und 65 Gew.-%, bevorzugt zwischen 20 und 60 Gew.-%, bezogen auf die wäßrige Dispersion.

Neben der erfindungswesentlichen wäßrigen Dispersion des hydrophilierten Polymerharzes HP können wäßrige Dispersionen der schon beschriebenen Komponenten (A1) und/oder (A2) und/oder (A3) und/oder (A4) in der Komponente (III) anwesend sein, deren Herstellung in der noch nicht veröffentlichten deutschen Patentanmeldung P 195 42 626.6 beschrieben ist.

### Die erfindungsgemäßen Beschichtungsmittel

Die Komponenten (I), (II) und (III) werden zur Herstellung der Beschichtungsmittel bevorzugt in solchen Mengen eingesetzt, daß das Äquivalentverhältnis von Hydroxylgruppen des hydrophilierten Polymerharzes HP sowie der Komponenten (A1), (A2), (A3) und (A4) zu den vernetzenden Gruppen des Vernetzungsmittels (F) zwischen 1 : 2 und 2 : 1, bevorzugt zwischen 1 : 1,2 und 1 : 1,5, liegt.
Die erfindungsgemäßen Beschichtungsmittel weisen außerdem bevorzugt einen Gesamtgehalt an üblichen Lackadditiven von 0 bis 10 Gew.-%, an organischen Lösemitteln von 5 bis 25 Gew.-%, bevorzugt von 10 bis 20 Gew.-%, an Wasser von 25 bis 60 Gew.-%, bevorzugt von 30 bis 50 Gew.-%, an Bindemittel (A) von 15 bis 60 Gew.-%, bevorzugt von 20 bis 50 Gew.-%, an Vernetzungsmittel (F) von 5 bis 30 Gew.-%, bevorzugt von 10 bis 20 Gew.-%, sowie an Pigmenten und/oder Füllstoffen von 0 bis 50 Gew.-%, bevorzugt von 0 bis 30 Gew.-%, auf, jeweils bezogen auf das Gesamtgewicht des Beschichtungsmittels.

Die Herstellung der Komponente (I) erfolgt nach dem Fachmann bekannten Methoden durch Mischen und gegebenenfalls Dispergieren der einzelnen Bestandteile. So erfolgt beispielsweise die Einarbeitung von farbgebenden Pigmenten üblicherweise durch Anreiben (Dispergieren) der jeweiligen Pigmente in einem oder mehreren Bindemitteln. Das Anreiben der Pigmente erfolgt mit Hilfe üblicher Vorrichtungen, wie beispielsweise Perlmühlen und Sandmühlen.

Die erfindungsgemäßen Beschichtungsmittel werden vorzugsweise nach folgenden Mischverfahren aus den Komponenten (I), (II), (III) und gegebenenfalls Wasser als weiterer Komponente (IV) hergestellt:

Zur Herstellung der erfindungsgemäßen Beschichtungsmittel werden zunächst dio Komponenten (I) und (II) gemischt, wobei bevorzugt diese Komponenten (I) und (II) kein Neutralisationsmittel enthalten. Dann wird zu dieser Mischung gegebenenfalls die Komponente (IV) zugesetzt. Entweder wird dann die so erhaltene Mischung in die Neutralisationsmittel enthaltende Komponente (III) gegeben und das erhaltene Beschichtungsmittel dispergiert, oder es wird dann in die so erhaltene Mischung die Neutralisationsmittel enthaltende Komponente (III) gegeben.

Ferner kann das erfindungsgemäße Beschichtungsmittel beispielsweise analog zu dem gerade beschriebenen Verfahren hergestellt werden, wobei allerdings das Neutralisationsmittel nicht in der Komponente (III) enthalten ist, sondern vor der Zugabe der Komponente (III) separat zugegeben wird.

Außerdem kann das erfindungsgemäße Beschichtungsmittel auch dadurch hergestellt werden, daß die Komponente (I) zunächst mit dem Neutralisationsmittel versetzt wird. Selbstverständlich kann anstelle dieses Mischens auch eine Komponente (I) eingesetzt werden, die bereits das Neutralisationsmittel enthält. Die so erhaltene Komponente(I) wird dann mit der Komponente (II) und gegebenenfalls der Komponente (IV) gemischt (gleichzeitig oder aufeinanderfolgende Mischung mit (II) und gegebenenfalls (IV)), die so erhaltene Mischung wird dann entweder zu der Komponente (III) gegeben oder mit der Komponente (III) versetzt, und das so jeweils erhaltene Beschichtungsmittel wird noch durch Dispergieren homogenisiert.

Die erfindungsgemäßen Beschichtungsmittel können durch übliche Applikationsmethoden, wie z.B. Spritzen, Rakeln, Streichen, Tauchen, auf beliebige Substrate, wie z.B. Metall, Holz, Kunststoff oder Papier, aufgebracht werden.

Die erfindurigsgemäßen Beschichtungsmittel werden üblicherweise bei Temperaturen von unter 120 Grad C, bevorzugt bei Temperaturen von maximal 80 Grad C, gehärtet. In speziellen Anwendungsformen der erfindungsgemäßen Beschichtungsmittel können auch höhere Härttemperaturen angewendet werden.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden vorzugsweise aber im Bereich der Reparaturlakkierung und der Lackierung von Kunststoff teilen eingesetzt.

Die erfindungsgemäßen wäßrigen Beschichtungsmittel können als Füller sowie zur Herstellung einschichtiger Decklackierungen sowie als pigmentierte Basislacke oder als Klarlacke in einem Verfahren zur Herstellung einer mehrschichtigen Lackierung eingesetzt werden (Base coat-/Clear coat-Verfahren).

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### Beispiel: Herstellung und Applikation eines Klarlacks

### Beispiel 1: Herstellung eines wasserverdünnbaren Acrylatharzes A1) für die Komponente (I)

In einem 41-Stahlkessel, ausgestattet mit Monomerzulauf, lnitiatorzulauf, Thermometer, ölheizung und Rückflußkühler werden 1000 g Ethoxyethylpropionat vorgelegt und auf 130 Grad C aufgeheizt. Dann wird eine Lösung von 89,4.g tert.-Butylperoxyethylhexanoat in 145,7 g Ethoxyethylpropionat in einer solchen Geschwindigkeit zugegeben, daß die Zugabe nach 4,5 Stunden abgeschlossen ist. 5 Minuten nach Beginn der Zugabe der tert.-Butylperoxyethylhexanoatlösung wird auch mit der Zugabe der Monomermischung aus (a1), (a2) und (a6):
(a1):
   285 g n-Butylmethacrylat
   229 g Methylmethacrylat,
   640 g Laurylmethacrylat (Handelsprodukt Mothacrylester 13 der Firma Röhm GmbH, Darmstadt),
(a2): 270 g Hydroxyethylacrylat und
(a6): 238 g Styrol
begonnen, wobei die Gesamtzulaufzeit für den ersten Monomerenzulauf 4 Stunden beträgt.

2,5 Stunden nachdem der erste Monomerenzulauf gestartet worden ist, wird ein zweiter Monomerenzulauf gestartet, der aus einem Gemisch aus (a2), (a3) und 27 g Ethoxyethylpropionat besteht:
(a2): 112 g Hydroxyethylacrylat und
(a3): 54 g Acrylsäure,
wobei die Gesamtzulaufzeit für den zweiten Monomerenzulauf bei 1,5 Stunden liegt.

Die Mischung (a1), (a2), (a3) und (a6) wird in einer solchen Geschwindigkeit zugegeben, daß die Zugabe nach 4 Stunden abgeschlossen ist. Nach Abschluß der Zugabe der tert.-Butylperoxyethylhexanoatlösung wird die Reaktionsmischung noch 2h bei 120 Grad C gehalten. Das Reaktionsgemisch wird durch Abdestillieren des organischen Lösemittels (während 1 Stunde bei 130 Grad C im Vakuum) auf einen Festkörpergehalt von 79,2 % eingestellt. Das so erhaltene Acrylatharz weist eine OH-Zahl von 140 mg KOH/g Festharz, eine Säurezahl von 31,1 mg KOH/g Festharz, ein zahlenmittleres Molekulargewicht Mn von 3220 Dalton und ein gewichtmittleres Molekulargewicht. Mw von 7505 Dalton auf. Die Viskosität einer 55%igen Lösung des Acrylatharzes in Ethoxyethylpropionat beträgt 4,4 dPa.s (23°C).

### Beispiel 2: Herstellung der Dispersion eines Polyacrylatharzes (A1) für die Komponente (III)

In einem 41-Stahlkessel, ausgestattet mit zwei Monomerzuläufen, Initiatorzulauf, Rührer und Rückflußkühler, werden 470 Gew.-Teile n-Butanol als Lösemittelkomponente vorgelegt und auf 110 Grad C aufgeheizt.
Dann wird eine Lösung von 36 Gew-Teilen tert.-Butylperoxyelhylhexanoat in 92,4 Gew.-Teilen n-Butanol in einer solchen Geschwindigkeit zugegeben, daß die Zugabe nach 5,5 Stunden abgeschlossen ist.
Mit Beginn der Zugabe der tert-Butylperoxyethylhexanoat-Lösung wird auch mit der Zugabe der Mischung aus (a1) bis (a6):
(a1):
   240 Gew.-Teilen n-Butylmethacrylat.
   209 Gew.-Teilen Methylmethacrylat,
   120 Gew.-Teilen Laurylmethacrylat (Methacrylester 13 der Firma Röhm GmbH),
(a2): 270 Gew.-Teilen Hydroxyethylmethacrylat und
(a6): 180 Gew.-Teilen Styrol,
begonnen. Die Mischung aus (a1), (a2) und (a6) wird in einer solchen Geschwindigkeit zugegeben, daß die Zugabe nach 5 Stunden abgeschlossen ist.

3,5 Stunden nach Beginn des ersten Monomerenzulaufs wird ein zweiter Monomerenzulauf gestartet, der gemeinsam mit dem ersten Monomerenzulauf beendet wird und aus einer Mischung der Monomerkomponenten (a2) und (a5) besteht:
(a2): 120 Gew.-Teile Hydroxyethylmethacrylat und
(a5): 61 Gew.-Teile Acrylsäure.

Nach Abschluß der Zugabe der tert.-Butylperoxyethylhexanoatlösung wird die Reaktionsmischung noch 2 h bei 120 Grad C gehalten.
Hiernach werden 12 Gew.-Teile Ethoxyethylpropionat als Lösemittelkomponente zugegeben.
Dann wird die Harzlösung auf 80 Grad C abgekühlt und innerhalb von etwa 30 Minuten mit 63 Gew.-Teilen Dimethylethanolamin in 1379 Gew.-Teilen entionisiertem Wasser bis zu einem Neutralisationsgrad von 85 % neutralisiert.
Anschließend wird das Lösemittelgemisch aus Ethoxyethylpropionat und n-Butanol durch azeotrope Destillation entfemt, bis höchstens 1 Gew.-% Lösemittel bezogen auf die Dispersion gaschromatographisch nachweisbar sind.
Nach Beendigung der Destillation wird die Dispersion durch die Zugabe von entionisiertem Wasser auf folgende Endkennzahlen eingestellt:
Säurezahl des Gesamtfestkörpers: 38,1 mg KOH/g,
Feststoffgehalt (1 Stunde, 130 Grad C): 38,5 %,
pH-Wert. 7,57.

### Beispiel 3: Herstellung der Dispersion eines Polyurethanharzes (A3) für die Komponente (III)

### 3.1. Herstellung der Polyestervorstufe

In einem für die Polykondensationsreaktionen geeigneten 41-Stahlreaktor werden 1088 g Hydroxypivalinsäureneopentylglykolester, 120 g Phthalsäureanhydrid, 1268 g Isophthalsäure, 21 g 2-Butyl-2-ethylpropandiol, 489 g Neopentylglykol und 113 g Xylol als Schleppmittel eingewogen.
Anschließend wird aufgeheizt und das Kondensationswasser kontinuierlich bis zu einer Säurezahl von < 3,5 mg KOH/g entfernt. Der Ansatz wird auf etwa 100°C abgekühlt und mit Ethoxyethylpropionat auf 79,7 % Festkörpergehalt eingestellt. Das resultierende Polyesterdiol weist eine Säurezahl von 4,4 mg KOH/g auf. Die Viskosität einer 60 %igen Lösung des Polyesterdiols in Ethoxyethylpropionat beträgt bei 23 Grad C 3,6 dPa.s.

### 3.2. Herstellung der Polyurethandispersion

In einem für die Polyurethanharzsynthese geeigneten 41-Stahlreaktor werden 749 g des Polyesterdiols gemäß Beispiel 3.1, 6,6 g 2-Butyl-2-ethylpropandiol, 69 g Dimethylolpropionsäure und 318 g m-Tetramethylxylylendiisocyanat vorgelegt und bei 110 Grad C bis zu einem konstanten Diisocyanatgehalt umgesetzt. Dann werden 101 g Trimethylolpropan zugesetzt und bis zur Beendigung der Reaktion weiter erhitzt. Anschließend werden 31,5g Ethoxyethylpropionat hinzugefügt. Nach weiteren 30 Minuten Rühren der Reaktionsmischung wird mit 36,7 g Dimethylethanolamin neutralisiert. Die Reaktionsmischung, die noch eine Temperatur von 90 bis 110 Grad C aufweist, wird danach in 1929,2 g entionisiertem Wasser, das eine Temperatur von 60 Grad C aufweist, dispergiert. Die resultierende Polyurethandispersion ist frei von Gelteilchen, weist einen Festkörpergehalt von 36,1 %, eine Säurezahl von 30,3 mg KOH/g sowie einen pH-Wert von 7,1 auf. Bei einer Temperatur von 40 Grad C ist die Polyurethandispersion länger als 4 Wochen lagerstabil.

### Beispiel 4: Herstellung der wäßrigen Dispersion des hydrophlllerten Polyurethanacrylatharzes HP für die Komponente (lll)

### Beispiel 4.1: Herstellung der Polyestervorstufe für das hydrophobe Polyurethanharz HP'

In einem für Polykondensationsreaktionen geeigneten Stahlreaktor werden werden 39,487 Teile Dimerfettsäure (Pripol ® 1013 der Firma Unichema), 21,739 Teile Hexandiol-1,6, 11,689 Teile Isophthalsäure und 1,035 Teile Xylol als Schleppmittel eingewogen.
Anschließend wird bis zu einer Temperatur von 220 Grad C aufgeheizt und das Kondensationswasser kontinuierlich unter Konstanthalten der Temperatur bei 220 Grad C bis zu einer Säurezahl < 4 mg KOH/g entfemt.
Der Ansatz wird auf 80 Grad C abgekühlt und mit 23,272 Teilen Methylethylketon auf einen Festkörpergehalt von ca. 73% eingestellt. Das resultierende Polyesterdiol weist eine Säurezahl von ca. 2,5 mg KOH/g und eine Hydroxylzahl von ca. 71 mg KOH/g auf. Die Viskosität der 73%igen Lösung des Polyesterdiols in Methylethylketon beträgt bei 23 Grad C ca. 2,0 dPas.

### Beispiel 4.2: Herstellung des hydrophoben Polyurethanharzes HP'

In einem für die Polyurethanharzsynthese geeigneten Stahlreaktor werden 55,13 Teile des Polyesterdiol gemäß Beispiel 4.1, 4,24 Teile Neopentylglykol, 2,28 Teile Trimethylolpropan-Monoallylether, 26,91 Teile Tetramethylxylylendiisocyanat, 3,76 Teile Methylethylketon und 0,03 Teile Dibutylzinndilaurat vorgelegt.
Danach wird unter Rühren auf 80 Grad C aufgeheizt und die Temperatur solange bei 80 Grad C gehalten bis der Isocyanatgehalt bei ca. 2,6 Gew.% liegt.
Anschließend werden 7,65 Teile Trimethylolpropan zugefügt und die Temperatur weiter bei 80 Grad C gehalten bis der Isocyanatgehalt unter 0,1 Gew.-% liegt.
Die Viskosität der 82%igen Lösung des Polyuretahnarzes PUR' in Methylethylketon beträgt zwischen 3,5 und 6,0 dPas (1:1 in N-Methylpyrrolidon).

### Beispiel 4.3: Herstellung der wäßrigen Dispersion des hydrophilierten Polyurethanacrylatharzes HP

### I.Stufe:

Mittels eines Microfluidizers ® der Firma Microfluidics Corp. (Newton, Massachusetts, U.S.A.) wird die Präemulsion PE bei einem Druck von 550 bar in 2 Durchlaufen aus:
11,07 Teilen Polyurethanharz HP' gemäß Beispiel 4.2,
   einem Gemisch aus:
   5,40 Teilen Methylmethacrylat,
   4,05 Teilen n-Butylacrylat und
   2,70 Teilen n-Butylmethacrylat
als Komponente (aa1),
1,35 Teilen Hydroxyethylmethacrylat als Komponente (aa2),
22,41 Teilen entionisiertem Wasser und
3,00 Teilen anionischem Emulgator Abex ® EP 110 der Firma Rhone-Poulenc (Ammoniumsulfonat eines ca. 5-fach ethoxylierten Nonylphenols)
hergestellt.

In einem für radikalische Polymerisationen geeigneten Stahlkessel mit 2 Monomerenzuläufen und 1 Initiatorzulauf werden 23,796 Teile entionisiertes Wasser vorgelegt und auf 82 Grad C aufgeheizt. Danach wird innerhalb von 1,5 Stunden die Präemulsion PE aus einem der beiden Monomerenzuläufe und eine wäßrige Initiatorlösung bestehend aus:
3,400 Teilen entionisiertem Wasser und
0,054 Teilen Ammoniumperoxidisulfat
aus dem Inititorzulauf gleichzeitig und gleichmäßig zudosiert, wobei die Temperatur auf 82 Grad C gehalten wird.

### II. Stufe:

Nach Abschluß der Zugabe der in der I.Stufe beschrieben Präemulsion PE und der Initiatorlösung wird über den zweiten Monomerzulauf eine Mischung aus:
einem Gemisch aus:
   9,00 Teilen Methylmethacrylat,
   6,75 Teilen n-Butylacrylat und
   3,70 Teilen n-Butylmethacrylat
als Komponente (aa1),
   2,25 Teilen Hydroxyethylmethacrylat
als Komponente (aa2),
   0,79 Teilen Methacrylsäure
als Komponente (aa4) sowie
   0,10 Teilen nichtionischer Emulgator lgepal ®CO 850 der Firma Rhone-Poulenc (ca. 20-fach ethoxyliertes Nonylphenol)
innerhalb von 2 Stunden zudosiert, wobei die Temperatur bei 82 Grad C gehalten wird.
Zur Nachreaktion wird das Reaktionsgemisch weitere 2 Stunden bei 82 Grad C gehalten.

Die resultierende wäßrige Dispersion des hydrophilierten Polyurethanacrylatharzes HP hat folgende Kenndaten:

| Festkörpergehalt | 45% |
|---|---|
| Säurezahl | 15 - 17 mg KOH/g |
| pH-Wert | 2,5 - 3,0 |
| mittlere Teilchengröße | ca. 200nm |

### Beispiel 5: Herstellung der Komponente (1) des Beschichtungsmittels

Aus den im folgenden angegebenen Bestandteilen wird durch Mischen mittels eines Rührers (600 Umdrehungen pro Minute) die Komponente (I) hergestellt:

| | |
|---|---|
| 15,0 Gew.-Teile | organisches wasserverdünnbares Acrylatharz (A1) gemäß Beispiel 1, |
| 4,0 Gew.-Teile | Butylglykolacetat, |
| 3,2 Gew.-Teile | Butylglykol, |
| 1,0 Gew.-Teite | Benetzungsmittel (Tensid S ®, Firma Biesterfeld), |
| 0,2 Gew.-Teile | Verlaufsmittel auf Basis eines polyethermodifizierten Dimethylsiloxan-Copolymerisats(Byk®331 der Firma Byk Gulden) und |
| 0,6 Gew.-Teile | Verlaufsmittel (Fluorad ® FC 430 der Firma 3M: 10%ig in Ethylothoxypropionat) |

### Beispiel 6: Herstellung der Komponente (II) des Beschichtungsmittels

Aus den im folgenden angegebenen Bestandteilen wird durch Mischen mittels eines Rührers (600 Umdrehungen pro Minute) die Komponente (II) hergestellt:

| | |
|---|---|
| 2,7 Gew.-Teile | Polyisocyanat auf Basis Hexamethylendiisocyanat-Allophanat (Desmodur ® VPLS 2102 der Firma Bayer AG), |
| 10,2 Gew.-Teile | Polyisocyanat auf Basis Hexamethytendiisoeyanat-Trimerisat (Tolonate ® HDTLV der Firma Rhone-Poulenc) und |
| 1,5 Gew.-Teile | Butylglykolacetat |

### Beispiel 7: Herstellung der Komponente (III) für das Beschichtungmittel

Aus den im folgenden angegebenen Bestandteilen wird durch Mischen mittels eines Rührers (600 Umdrehungen pro Minute) die Komponente (III) hergestellt:

| | |
|---|---|
| 30,0 Gew.-Teile | entionisiertes Wasser, |
| 0,5 Gew.-Teile | Dimethylethanolamin, |
| 2,0 Gew.-Teile | Verdickungsmittel auf Polyurethan-Basis (Dapral®T210 der Firma Akzo), |
| 9,0 Gew.-Teile | der wäßrigen Dispersion des hydrophilierten Polyurethanacrylats HP gemäß Beispiel 4, wobei der pH-Wert der Dispersion mit Dimethylethanolamin zuvor auf 7,0 eingestellt wird, und |
| 20,0 Gew.-Teile | Polyurethandispersion (A3) gemäß Beispiel 3. |

### Beispiel 8: Herstellung des erfindungsgemäßen Klarlacks KL aus den Komponenten (I), (II) und (III)

Die Herstellung des erfindungsgemäßen Klarlacks KL erfolgt durch Mischen der Komponenten .(I), (II) und (III) mittels eines Rührers (600 Umdrehungen pro Minute), indem die Komponente (II) in die Komponente (I) eingerührt wird und die resultierende Mischung in die Komponente (III) eingerührt wird.

### Vergleichsbeispiel 9: Herstellung eines Klarlacks KL' aus Komponenten (1), (II) und (III) nach der noch nicht veröffentlichten deutschen Patentanmeldung P 195 42 626.6

### Beispiel 9.1: Herstellung der Komponente (I) des Beschichtungsmittels

Aus den im folgenden angegebenen Bestandteilen wird durch Mischen mittels eines Rührers (600 Umdrehungen pro Minute) die Komponente (I) hergestellt:

| | |
|---|---|
| 15,0 Gew.-Teile | organisches wasserverdünnbares Acrylatharz (A1) gemäß Beispiel 1, |
| 4,0 Gew.-Teile | Butylglykolacetat, |
| 3,2 Gew.-Teile | Butylglykol, |
| 1,0 Gew.-Teile | Benetzungsmittel (Tensid S ®, Firma Biesterfeld), |
| 0,2 Gew.-Teile | Verlaufsmittel auf Basis eines polyethermodifizierten Dimethylsiloxan-Copolymerisats(Byk®331 der Firma Byk Gulden) und |
| 0.6 Gew.-Teile | Verlaufsmittel (Fiuorad ® FC 430 der Firma 3M: 10%ig in Ethylethoxypropionat) |

### Beispiel 9.2: Herstellung der Komponente (11) des Beschichtungsmittels

Aus den im folgenden angegebenen Bestandteilen wird durch Mischen mittels eines Rührers (600 Umdrehungen pro Minute) die Komponente (II) hergestellt:

| | |
|---|---|
| 3,0 Gew.-Teile | Polyisocyanat auf Basis Hexamethylendiisocyanat-Allophanat (Desmodur ® VPLS 2102 der Firma Bayer AG), |
| 11,0 Gew.-Teile | Polyisocyanat auf Basis Hexamethylendiisocyanat-Trimerisat (Tolonate ® HDTLV der Firma Rhone-Poulenc) und |
| 1,5 Gew.-Teile | Butylglykolacetat |

### Beispiel 9.3: Herstellung der Komponente (III) für das Beschichtungmittel

Aus den im folgenden angegebenen Bestandteilen wird durch Mischen mittels eines Rührers (600 Umdrehungen pro Minute) die Komponente (III) hergestellt:

| | |
|---|---|
| 28,0 Gew.-Teile | entionisiertes Wasser, |
| 0,5 Gew.-Teile | Dimethylethanolamin, |
| 2,0 Gew.-Teile | Verdickungsmittel auf Polyurethan-Basis (Dapral ® T210 der Firma Akzo), |
| 10,0 Gew.-Teile | der wäßrigen Dispersion des Polyacrylatharzes (A1) gemäß Beispiel 2, und |
| 20,0 Gew.-Teile | Polyurethandispersion (A3) gemäß Beispiel 3. |

### Beispiel 9.4: Herstellung des Klarlacks KL' aus den Komponenten (I), (II) und (III) gemäß den Beispielen 9.1 bis 9.3

Die Herstellung des Klarlacks KL' erfolgt durch Mischen der Komponenten (I), (II) und (III) gemäß den Beispielen 9.1 bis 9.3 mittels eines Rührers (600 Umdrehungen pro Minute), indem die Komponente (II) in die Komponente (I) eingerührt wird und die resultierende Mischung in die Komponente (III) eingerührt wird.

### Beispiel 10: Applikation der Klarlacke KL gemäß Beispiel 8 und KL' gemäß dem Vergleichsbeispiel 9 und Prüfung der eingebrannten Lackfilme

Auf ein mit einer handelsüblichen Elektrotauchlackierung und einem handelsüblichen Füller beschichtetes phosphatiertes Stahlblech wird eine wasserverdünnbare, mit Aluminiumplättchen pigmentierte Basisbeschichtungszusammensetzung gemäß EP-A-279 813 so appliziert, daß eine Trockenfilmschichtdicke von 12 bis 15 µm erhalten wird.
Die applizierte Basisbeschichtungszusammensetzung wird 10 Min. bei Raumtemperatur und 10 Minuten bei 60 Grad C getrocknet.
Dann werden die Deckbeschichtungszusammensetzungen gemäß Beispiel8 und Vergleichbeispiel 9 in 3 Spritzgängen mit 15 Minuten Zwischenablüftzeit auf die Basisschicht gespritzt. Schließlich wird 60 Minuten bei Raumtemperatur getrocknet und 30 Minuten bei 60 Grad C im Umluftofen eingebrannt. Die so erhaltenen mehrschichtigen Überzüge wurden mehreren Prüfungen unterzogen, deren Ergebnisse in Tabelle 1 dargestellt sind.

**Tabelle 1:**

| Eigenschaften der gemäß Beispiel 10 hergestellten Beschichtungen: | | |
|---|---|---|
| Beschichtung gemäß | | |
| | Beispiel 8 | Vergleichsbeipiel 9 |
| Schichtdicke (Mikrometer) | Klarlack KL 55 | Klarlack KL' 50 |
| Verlauf (visuell) | sehr gut | sehr gut |
| Verhalten im Schwitzwassertest (visuell) | geringes Anquellen | geringes Anquellen |
| Trocknungsverhalten⁽¹⁾ | 2 | 4 |

| | | |
|---|---|---|
| ⁽¹⁾ Beurteilung des Trocknungsverhaltens., | | |
| 1 = sehr schnell | | |
| 2 = schnell | | |
| 3 = mittelschnell | | |
| 4 = langsam | | |
| 5 = sehr langsam | | |

## Patentansprüche

1. Aus mindestens drei Komponenten bestehendes Beschichtungsmittel, enthaltend
1.)die Komponente (I), die als Bindemittel (A)
(A1) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltenden Acrylatcopolymerisat (A1) und/oder
(A2) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltenden Polyesterharz (A2) und/oder
(A3) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltenden Polyurethanharz (A3) und/oder,
(A4) gegebenenfalls mindestens ein weiteres Bindemittel
enthält,
2.)die Komponente (II) als Vernetzungsmittel (F) mindestens ein in einem oder mehreren organischen Lösemitteln gelöstes oder dispergiertes nicht-blockiertes Di-und/oder Polyisocyanat (F1) und gegebenenfalls mindestens ein weiteres Vernetzungsmittel, bestehend aus mindestens einer Epoxidverbindung (F2) mit mindestens zwei Epoxidgruppen pro Molekül und/oder mindestens einem Aminoplastharz (F3), enthält und
3.)die Komponente (III) mindestens eine wäßrige Dispersion eines hydrophilierten Polymerharzes HP, sowie gegebenenfalls die Komponenten (A1) und/oder (A2) und/oder (A3) und/oder (A4)in wäßriger Dispersion enthält,
**dadurch gekennzeichnet, daß** die wäßrige Dispersion des hydrophilierten Polymerharzes HP hergestellt wird, indem in entionisiertem Wasser eine Präemulsion enthaltend Mikroteilchen, bestehend aus einem hydrophoben Polymerharz HP' und den monomeren Bestandteilen
(aa1) einen von (aa2), (aa3) und (aa4) verschiedenen und mit (aa2), (aa3) und (aa4) copolymerisierbaren, im wesentlichen carboxylgruppenfreien (Meth)acrylsäureester oder einem Gemisch aus solchen Monomeren,
(aa2) ein mit (aa1), (aa3) und (aa4) copolymerisierbares, ethylenisch ungesättigtes Monomer, das mindestens eine Hydroxylgruppe pro Molekül trägt und im wesentlichen carboxylgruppenfrei ist,
(aa3) gegebenenfalls ein mit (aa1), (aa2) und (aa4) copolymerisierbares, von (aa1), (aa2) und (aa4) verschiedenes, im wesentlichen carboxylgruppenfreies, ethylenisch ungesättigtes Monomer oder einem Gemisch aus solchen Monomeren, sowie
(aa4) ein mindestens eine Carboxylgruppe pro Molekül tragendes, mit (aa1), (aa2) und (aa3) copolymerisierbares, ethylenisch ungesättigtes Monomer oder ein Gemisch aus solchen Monomeren
durch hohe Scherbelastung der wäßrigen Dispersion des hydrophoben Polymerharzes HP' und der wäßrigen Emulsion der monomeren Bestandteile hergestellt wird und anschließend die polymerisierbaren Bestandteile der Präemulsion PE polymerisiert werden.

2. Beschichtungsmittel nach Anspruch 1,
**dadurch gekennzeichnet, daß** die in der Komponente (111) anwesende wäßrige Dispersion des hydrophilierten Polymerharzes HP hergestellt wird durch ein mehrstufiges Verfahren, wobei
I. in entionisiertem Wasser eine Präemulsion PE, enthaltend Mikroteilchen, bestehend aus einem hydrophoben Polymerharz HP' und den monomeren Bestandteilen
(aa1) einem von (aa2) und (aa3) verschiedenen und mit (aa2) und (aa3) copolymerisierbaren, im wesentlichen carboxylgruppenfreien (Meth)acrylsäureester oder einem Gemisch aus solchen Monomeren,
(aa2) einem mit (aa1) und (aa3) copolymerisierbaren, ethylenisch ungesättigten Monomeren, das mindestens eine Hydroxylgruppe pro Molekül trägt und im wesentlichen carboxylgruppenfrei ist, sowie
(aa3) gegebenenfalls einem mit (aa1) und (aa2) copolymerisierbaren, von (aa1) und (aa2) verschiedenen, im wesentlichen carboxylgruppenfreien, ethylenisch ungesättigten Monomeren oder einem Gemisch aus solchen Monomeren,
durch hohe Scherbelastung der wäßrigen Dispersion des hydrophoben Polymerharzes HP' und der wäßrigen Emulsion der monomeren Bestandteile hergestellt wird und darauf mit der Polymerisation der polymerisierbaren Bestandteile der Präemulsion PE begonnen wird und anschließend
II. während und/oder nach Abschluß, jedoch nicht gleichzeitig mit Beginn, der Polymerisation der polymerisierbaren Bestandteile der Präemulsion PE ein Monomerengemisch, enthaltend
(aa1) einen von (aa2), (aa3) und (aa4) vorschiedenen und mit (aa2), (aa3) und (aa4) copolymerisierbaren , im wesentlichen carboxylgruppenfreien (Meth)acrylsäureester oder einem Gemisch aus solchen Monomeren,
(aa2) ein mit (aa1). (aa3) und (aa4) copolymerisierbares, ethylenisch ungesättigtes Monomer, das mindestens eine Hydroxylgruppe pro Molekül trägt und im wesentlichen carboxylgruppenfrei ist,
(aa3) gegebenenfalls ein mit (aa1), (aa2) und (aa4) copolymerisierbares, von (aa1), (aa2) und (aa4) verschiedenes, Im wesentlichen carboxylgruppenfreies, ethylenisch ungesättigtes Monomer oder einem Gemisch aus solchen Monomeren, sowie
(aa4) ein mindestens eine Carboxylgruppe pro Molekül tragendes, mit (aa1), (aa2) und (aa3) copolymerisierbares, ethylenisch ungesättigtes Monomer oder ein Gemisch aus solchen Monomeren
im Zulauf zugegeben wird und anschließend polymerisiert wird.

3. Beschichtungsmittel nach einem der Ansprüche 1 oder 2, **dadurch gekennzeichnet, daß** das hydrophobe Polymerisat HP' ein Polyadditionsharz und/oder ein Polykondensationsharz ist.

4. Beschichtungsmittel nach einem der Ansprüche 1 bis 3, **dadurch gekennzeichnet, daß** das hydrophobe Polymerisat HP' polymerisierbare Doppelbindungen enthält, deren Zahl vorzugsweise im statistischen Mittel 0,05 bis 1,1 pro Polymermolekül beträgt.

5. Beschichtungsmittel nach einem der Ansprüche 1 bis 4, **dadurch gekennzeichnet, daß** das hydrophobe Polymerisat HP' ein Polyurethanharz ist.

6. Beschichtungsmittel nach Anspruch 5
**dadurch gekennzeichnet, daß** das Polyurethanharz HP' aufgebaut ist aus:
(b1) einem gegebenenfalls polymerisierbare Doppelbindungen aufweisenden Polyester- oder Polyetherpolyol mit einem zahlenmittleren Molekulargewicht Mn von 400 bis 5000 Dalton oder einem Gemisch aus solchen Polyether- und Polyesterpolyolen,
(b2) einem Di- und/oder Polyisocyanat oder einem Gemisch aus Di- und/oder Polyisocyanaten,
(b3) gegebenenfalls einer Verbindung, die mindestens eine gegenüber Isocyanatgruppen reaktive und mindestens eine zur Anionenbildung befähigte Gruppe im Molekül aufweist, oder einem Gemisch aus solchen Verbindungen,
(b4) gegebenenfalls einer Verbindung, die neben einer polymerisierbaren Doppelbindung mindestens noch eine gegenüber Isocyanatgruppen reaktive Gruppe enthält, oder einem Gemisch aus solchen Verbindungen,
(b5) gegebenenfalls einer Verbindung, die gegenüber Isocyanatgruppen reaktive Gruppe und mindestens eine Polyoxyalkylengruppe im Molekül aufweist, oder ein Gemisch aus solchen Verbindungen und
(b6) gegebenenfalls mindestens eine Hydroxyl- und/oder Aminogruppe enthaltende organische Verbindung mit einem Molekulargewicht von 60 bis 600 Dalton oder ein Gemisch aus solchen Verbindungen.

7. Beschichtungsmittel nach einem der Ansprüche 5 oder 6, **dadurch gekennzeichnet, daß** die Komponente (b1) des Polyurethanharzes HP' aus bis zu 100 Gew.-%, bezogen auf (b1 aus alpha, omega-Polymethacrylatdiolen besteht.

8. Beschichtungsmittel nach einem der Ansprüche 1 bis 7, **dadurch gekennzeichnet, daß** das hydrophobe Polymerharz HP' weniger als 30 Gew.-% des hydrophlilierten Polymerharzes HP, bezogen auf das Polymerharz HP, ausmacht.

9. Beschichtungsmittel nach einem der Ansprüche 1 bis 8, **dadurch gekennzeichnet, daß** die monomeren Bestandteile (aa1), (aa2), (aa3) und (aa4) in Mengen von:
30 bis 98 Gew.-% (aa1),
1 bis 30 Gew.-% (aa2),
0 bis 20 Gew.-% (aa3) und
1 bis 20 Gew.-% (aa4)
eingesetzt werden, wobei die Summe der Monomeren (aa1), (aa2), (aa3) und (aa4) 100 Gew.-% ausinacht.

10. Verwendung der Beschichtungsmittel nach den Ansprüchen 1 bis 9 für die Lackierung von Automobilkarossen und/oder Kunststoffteile.

11. Verwendung der Beschichtungsmittel nach den Ansprüchen 1 bis 9 für die Autoreparaturlackierung.

## Claims

1. Coating composition consisting of at least three components, comprising
1.) component (I), which contains as binder (A)
(A1) at least one acrylate copolymer (A1) which is dispersed or dissolved in one or more organic, optionally water-dilutable solvents and contains hydroxyl groups and acid groups which can be converted into the corresponding acid anion groups, and/or
(A2) at least one polyester resin (A2) which is dispersed or dissolved in one or more organic, optionally water-dilutable solvents and contains hydroxyl groups and acid groups which can be converted into the corresponding acid anion groups, and/or
(A3) at least one polyurethane resin (A3) which is dispersed or dissolved in one or more organic, optionally water-dilutable solvents and contains hydroxyl groups and acid groups which can be converted into the corresponding acid anion groups, and/or
(A4) optionally at least one further binder,
2.) component (II) contains as crosslinking agent (F) at least one nonblocked di- and/or polyisocyanate (F1) which is dispersed or dissolved in one or more organic solvents, and optionally at least one further crosslinking agent, consisting of at least one epoxide compound (F2) having at least two epoxide groups per molecule and/or at least one amino resin (F3), and
3.) component (III) comprises at least one aqueous dispersion of a hydrophilicized polymer resin HP, and also, optionally, components (A1) and/or (A2) and/or (A3) and/or (A4) in aqueous dispersion,
**characterized in that** the aqueous dispersion of the hydrophilicized polymer resin HP is prepared by a method in which in deionized water, a preemulsion comprising microparticles consisting of a hydrophobic polymer resin HP' and the monomeric constituents
(aa1) an essentially carboxyl-free (meth)acrylic ester which is different from (aa2), (aa3) and (aa4) and is copolymerizable with (aa2), (aa3) and (aa4), or a mixture of such monomers,
(aa2) an ethylenically unsaturated monomer which is copolymerizable with (aa1), (aa3) and (aa4), carries at least one hydroxyl group per molecule and is essentially free from carboxyl groups,
(aa3) optionally an ethylenically unsaturated monomer which is copolymerizable with (aa1), (aa2) and (aa4), is different from (aa1), (aa2) and (aa4) and is essentially free from carboxyl groups, or a mixture of such monomers, and
(aa4) an ethylenically unsaturated monomer which carries at least one carboxyl group per molecule and is copolymerizable with (aå1), (aa2) and (aa3), or a mixture of such monomers,
is prepared by subjecting the aqueous dispersion of the hydrophobic polymer resin HP' and the aqueous emulsion of the monomeric constituents to high shear and subsequently the polymerizable constituents of the preemulsion PE are polymerized.

2. Coating composition according to Claim 1, **characterized in that** the aqueous dispersion of the hydrophilicized polymer resin HP present in component (III) is prepared by a multistage method in which
I. in deionized water, a preemulsion PE comprising microparticles consisting of a hydrophobic polymer resin HP' and the monomeric constituents
(aa1) an essentially carboxyl-free (meth)acrylic ester which is different from (aa2) and (aa3) and is copolymerizable with (aa2) and (aa3), or a mixture of such monomers,
(aa2) an ethylenically unsaturated monomer which is copolymerizable with (aa1) and (aa3), carries at least one hydroxyl group per molecule and is essentially free from carboxyl groups, and
(aa3) optionally an ethylenically unsaturated monomer which is copolymerizable with (aa1) and (aa2), is different from (aa1) and (aa2) and is essentially free from carboxyl groups, or a mixture of such monomers,
is prepared by subjecting the aqueous dispersion of the hydrophobic polymer resin HP' and the aqueous emulsion of the monomeric constituents to high shear and subsequently the polymerization of the polymerizable constituents of the preemulsion PE is begun,
II. during and/or after the conclusion, but not simultaneously with the commencement, of the polymerization of the polymerizable constituents of the preemulsion PE, a monomer mixture comprising
(aa1) an essentially carboxyl-free (meth)acrylic ester which is different from (aa2), (aa3) and (aa4) and is copolymerizable with (aa2), (aa3) and (aa4), or a mixture of such monomers,
(aa2) an ethylenically unsaturated monomer which is copolymerizable with (aa1), (aa3) and (aa4), carries at least one hydroxyl group per molecule and is essentially free from carboxyl groups,
(aa3) optionally an ethylenically unsaturated monomer which is copolymerizable with (aa1), (aa2) and (aa4), is different from (aa1), (aa2) and (aa4) and is essentially free from carboxyl groups, or a mixture of such monomers, and
(aa4) an ethylenically unsaturated monomer which carries at least one carboxyl group per molecule and is copolymerizable with (aa1), (aa2) and (aa3), or a mixture of such monomers
is added in a feed stream and then polymerized.

3. Coating composition according to one of Claims 1 or 2, **characterized in that** the hydrophobic polymer HP' is a polyaddition resin and/or a polycondensation resin.

4. Coating composition according to one of Claims 1 to 3, **characterized in that** the hydrophobic polymer HP' contains polymerizable double bonds whose number is preferably on average from 0.05 to 1.1 per polymer molecule.

5. Coating composition according to one of Claims 1 to 4, **characterized in that** the hydrophobic polymer HP' is a polyurethane resin.

6. Coating composition according to Claim 5, **characterized in that** the polyurethane resin HP' is composed of:
(b1) a polyester or polyether polyol which optionally contains polymerizable double bonds and has a number-average molecular weight Mn of from 400 to 5000 daltons, or a mixture of such polyether and polyester polyols,
(b2) a di- and/or polyisocyanate or a mixture of di- and/or polyisocyanates,
(b3) optionally a compound which has in the molecule at least one group which is reactive toward isocyanate groups and at least one group which is capable of forming anions, or a mixture of such compounds,
(b4) optionally a compound which in addition to a polymerizable double bond also contains at least one group which is reactive toward isocyanate groups, or a mixture of such compounds,
(b5) optionally a compound which has in the molecule [lacuna] group which is reactive toward isocyanate groups and at least one polyoxyalkylene group, or a mixture of such compounds, and
(b6) optionally at least one hydroxyl- and/or amino-containing organic compound having a molecular weight of from 60 to 600 daltons, or a mixture of such compounds.

7. Coating composition according to one of Claims 5 or 6, **characterized in that** component (b1) of the polyurethane resin HP' consists of up to 100% by weight, based on (b1), of alpha,omega-polymethacrylate diols.

8. Coating composition according to one of Claims 1 to 7, **characterized in that** the hydrophobic polymer resin HP' makes up less than 30% by weight of the hydrophilicized polymer resin HP, based on the polymer resin HP.

9. Coating composition according to one of Claims 1 to 8, **characterized in that** the monomeric constituents (aa1), (aa2), (aa3) and (aa4) are employed in quantities of:
from 30 to 98% by weight of (aa1),
from 1 to 30% by weight of (aa2),
from 0 to 20% by weight of (aa3) and
from 1 to 20% by weight of (aa4),
the sum of the monomers (aa1), (aa2), (aa3) and (aa4) making up 100% by weight.

10. Use of the coating compositions according to Claims 1 to 9 for the finishing of automobile carriages [sic] and/or coating of plastic parts.

11. Use of the coating compositions according to Claims 1 to 9 for automotive refinishing.

## Revendications

1. Composition de revêtement comprenant au moins trois composants, dans laquelle
1.) le composant (I) contient en tant que liant (A)
(A1) au moins un copolymère d'acrylate (A1) renfermant des groupes hydroxy et des groupes acides, qui peuvent être transformés en groupes acides anioniques correspondants, et dissous ou dispersé dans un ou plusieurs solvants organiques éventuellement diluables à l'eau, et/ou
(A2) au moins une résine de polyester (A2) renfermant des groupes hydroxy et des groupes acides, qui peuvent être transformés en groupes acides anioniques correspondants, et dissoute ou dispersée dans un ou plusieurs solvants organiques éventuellement diluables à l'eau, et/ou
(A3) au moins une résine de polyuréthanne (A3) renfermant des groupes hydroxy et des groupes acides, qui peuvent être transformés en groupes acides anioniques correspondants, et dissoute ou dispersée dans un ou plusieurs solvants organiques éventuellement diluables à l'eau, et/ou
(A4) éventuellement au moins un autre liant,
2.) le composant (II) contient, en tant qu'agent de réticulation (F), au moins un di- et/ou polyisocyanate (F1), dissous ou dispersé, non bloqué, dans un ou plusieurs solvants organiques, et éventuellement au moins un agent de réticulation supplémentaire, comprenant au moins un composé époxyde (F2) ayant au moins deux groupes époxy par molécule et/ou au moins une résine aminoplaste (F3), et
3.) le composant (III) contient au moins une dispersion aqueuse d'une résine polymère hydrophile HP, et éventuellement les composants (A1) et/ou (A2) et/ou (A3) et/ou (A4) en dispersion aqueuse,
**caractérisée en ce que** la dispersion aqueuse de la résine polymère hydrophile HP est obtenue en préparant, dans de l'eau désionisée, une pré-émulsion contenant des microparticules, constituée d'une résine polymère hydrophobe HP' et des constituants monomères
(aa1) un ester (méth)acrylique essentiellement dépourvu de groupe carboxy, différent de (aa2), (aa3) et (aa4), et copolymérisable avec (aa2), (aa3) et (aa4), ou un mélange de tels monomères,
(aa2) un monomère éthyléniquement insaturé copolymérisable avec (aa1), (aa3) et (aa4), qui renferme au moins un groupe hydroxy par molécule et qui est essentiellement dépourvu de groupe carboxy,
(aa3) éventuellement un monomère éthyléniquement insaturé essentiellement dépourvu de groupe carboxy, différent de (aa1), (aa2) et (aa4), et copolymérisable avec (aa1), (aa2) et (aa4), ou un mélange de tels monomères, et
(aa4) un monomère éthyléniquement insaturé copolymérisable avec (aa1), (aa2) et (aa3), qui renferme au moins un groupe carboxy par molécule, ou un mélange de tels monomères,
par forte sollicitation par cisaillement de la dispersion aqueuse de la résine polymère hydrophobe HP' et de l'émulsion aqueuse des constituants monomères, et en polymérisant ensuite les constituants polymérisables de la pré-émulsion PE.

2. Composition de revêtement selon la revendication 1, **caractérisée en ce que** la dispersion aqueuse de la résine polymère hydrophile HP, présente dans le composant (III), est préparée par un procédé à plusieurs étapes, dans lequel
I. on prépare, dans de l'eau désionisée, une pré-émulsion PE contenant des microparticules, constituée d'une résine polymère hydrophobe HP' et des constituants monomères
(aa1) un ester (méth)acrylique essentiellement dépourvu de groupe carboxy, différent de (aa2) et (aa3), et copolymérisable avec (aa2) et (aa3), ou un mélange de tels monomères,
(aa2) un monomère éthyléniquement insaturé copolymérisable avec (aa1) et (aa3), qui renferme au moins un groupe hydroxy par molécule et qui est essentiellement dépourvu de groupe carboxy, et
(aa3) éventuellement un monomère éthyléniquement insaturé essentiellement dépourvu de groupe carboxy, différent de (aa1) et (aa2), et copolymérisable avec (aa1) et (aa2), ou un mélange de tels monomères,
par forte sollicitation par cisaillement de la dispersion aqueuse de la résine polymère hydrophobe HP' et de l'émulsion aqueuse des constituants monomères, et en commençant alors la polymérisation des constituants polymérisables de la pré-émulsion PE, et ensuite
II. pendant et/ou à la fin de, mais pas au début de, la polymérisation des constituants polymérisables de la pré-émulsion PE, un mélange de monomères contenant
(aa1) un ester (méth)acrylique essentiellement dépourvu de groupe carboxy, différent de (aa2), (aa3) et (aa4), et copolymérisable avec (aa2), (aa3) et (aa4), ou un mélange de tels monomères,
(aa2) un monomère éthyléniquement insaturé copolymérisable avec (aa1), (aa3) et (aa4), qui renferme au moins un groupe hydroxy par molécule et qui est essentiellement dépourvu de groupe carboxy,
(aa3) éventuellement un monomère éthyléniquement insaturé essentiellement dépourvu de groupe carboxy, différent de (aa1), (aa2) et (aa4), et copolymérisable avec (aa1), (aa2) et (aa4), ou un mélange de tels monomères, et
(aa4) un monomère éthyléniquement insaturé copolymérisable avec (aa1), (aa2) et (aa3), qui renferme au moins un groupe carboxy par molécule, ou un mélange de tels monomères,
est ajouté dans la charge d'alimentation et ensuite polymérisé.

3. Composition de revêtement selon la revendication 1 ou 2, **caractérisée en ce que** le polymère hydrophobe HP' est une résine de polyaddition et/ou une résine de polycondensation.

4. Composition de revêtement selon l'une quelcon que des revendications 1 à 3, **caractérisée en ce que** le polymère hydrophobe HP' renferme des doubles liaisons polymérisables dont le nombre est de préférence, en moyenne statistique, de 0,05 à 1,1 par molécule de polymère.

5. Composition de revêtement selon l'une quelconque des revendications 1 à 4, **caractérisée en ce que** le polymère hydrophobe HP' est une résine de polyuréthanne.

6. Composition de revêtement selon la revendication 5, **caractérisée en ce que** la résine de polyuréthanne HP' est constituée de:
(b1) un polyester-polyol ou polyéther-polyol renfermant éventuellement des doubles liaisons polymérisables, ayant un poids moléculaire moyen en nombre Mn de 400 à 5000 daltons, ou un mélange de tels polyéther-polyols et polyester-polyols,
(b2) un diisocyanate et/ou polyisocyanate ou un mélange de diisocyantes et/ou polyisocyanates,
(b3) éventuellement un composé qui renferme au moins un groupe réactif vis-à-vis des groupes isocyanate et au moins groupe capable de former des anions, ou un mélange de tels composés,
(b4) éventuellement un composé qui renferme également, en plus d'une double liaison polymérisable, au moins un groupe réactif vis-à-vis des groupes isocyanate, ou un mélange de tels composés,
(b5) éventuellement un composé qui renferme un groupe réactif vis-à-vis des groupes isocyanate et au moins groupe polyoxyalkylène dans la molécule, ou un mélange de tels composés,
(b6) éventuellement un composé organique renfermant au moins un groupe hydroxy et/ou amino, ayant un poids moléculaire de 60 à 600 daltons, ou un mélange de tels composés.

7. Composition de revêtement selon l'une quelconque des revendications 5 ou 6, **caractérisée en ce que** le composant (b1) de la résine de polyuréthanne HP' comprend jusqu'à 100% en poids d'alpha, oméga-polyméthacrylate-diols, par rapport à (b1).

8. Composition de revêtement selon l'une quelconque des revendications 1 à 7, **caractérisée en ce que** la résine polymère hydrophobe HP' constitue moins de 30% en poids de la résine polymère hydrophile HP, par rapport à la résine polymère HP.

9. Composition de revêtement selon l'une quelconque des revendications 1 à 8, **caractérisée en ce que** les constituants monomères (aa1), (aa2), (aa3) et (aa4) sont utilisés en quantités de:
30 à 98% en poids de (aa1),
1 à 30% en poids de (aa2),
0 à 20% en poids de (aa3) et
1 à 20% en poids de (aa4),
la somme des monomères (aa1), (aa2), (aa3) et (aa4) étant de 100% en poids.

10. Utilisation des compositions de revêtements selon les revendications 1 à 9 pour le revêtement de carosseries d'automobiles et/ou de composants plastiques.

11. Utilisation des compositions de revêtements selon les revendications 1 à 9 pour les retouches d'automobiles.
